(19) Europäisches Patentamt
European Patent Office
Office européen des brevets

(11) **EP 3 143 064 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **15725539.9**

(22) Anmeldetag: **13.05.2015**

(51) Int Cl.:
*C08G 18/68* (2006.01)    *C08F 283/00* (2006.01)
*C08G 63/181* (2006.01)    *C08G 63/199* (2006.01)
*C08G 63/676* (2006.01)    *C09D 151/08* (2006.01)
*C08G 18/10* (2006.01)    *C09D 167/02* (2006.01)
*C09D 161/28* (2006.01)

(86) Internationale Anmeldenummer:
**PCT/EP2015/060683**

(87) Internationale Veröffentlichungsnummer:
**WO 2015/173348 (19.11.2015 Gazette 2015/46)**

(54) **WÄSSRIGE DISPERSION WENIGSTENS ZWEIER POLYMERER HARZE UND DIESE ENTHALTENDE WÄSSRIGE BESCHICHTUNGSZUSAMMENSETZUNG ZUM AUFBRINGEN EINER DECKLACKSCHICHT**

AQUEOUS DISPERSION OF AT LEAST TWO POLYMERIC RESINS AND AQUEOUS COATING COMPOSITION CONTAINING SAME FOR APPLYING A TOP VARNISH COAT

DISPERSION AQUEUSE D'AU MOINS DEUX RÉSINES POLYMÈRES ET COMPOSITION DE REVÊTEMENT À BASE AQUEUSE LA CONTENANT DESTINÉE À L'APPLICATION D'UNE COUCHE DE VERNIS DE RECOUVREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2014 EP 14168232**

(43) Veröffentlichungstag der Anmeldung:
**22.03.2017 Patentblatt 2017/12**

(73) Patentinhaber: **Akzo Nobel Coatings International B.V.**
**6824 BM Arnhem (NL)**

(72) Erfinder:
• **JÖGE, Frank**
**48324 Albersloh (DE)**
• **VOLLMANN, Dominik**
**48231 Warendorf (DE)**
• **RESSEL, Jörg**
**48165 Münster (DE)**
• **SCHWARZENBERG, Lara**
**48165 Münster (DE)**

(74) Vertreter: **Akzo Nobel IP Department**
**Velperweg 76**
**6824 BM Arnhem (NL)**

(56) Entgegenhaltungen:
WO-A1-01/04222    WO-A1-96/12747
WO-A1-2009/100938    DE-A1- 4 009 858
DE-A1- 4 010 176

**EP 3 143 064 B1**

**Beschreibung**

Die vorliegende Erfindung betrifft eine wässrige Dispersion (P) wenigstens zweier voneinander verschiedener polymerer Harze (P1) und (P2), wobei (P1) ein Copolymer ist, welches durch Copolymerisation von ethylenisch ungesättigten Monomeren in Gegenwart wenigstens eines polymerisierbare Kohlenstoff-Doppelbindungen aufweisenden Polyurethan-Harzes erhältlich ist, und (P2) ein funktionelle Hydroxyl-Gruppen aufweisender Polyester ist, welcher eine Säure-Zahl von <25 mg KOH pro g an Polyester aufweist, und wobei (P) erhältlich ist durch ein wenigstens vier Schritte (1), (2), (3) und (4) umfassendes Verfahren, eine wässrige Beschichtungszusammensetzung enthaltend die wässrige Dispersion (P), ein Verfahren zur zumindest teilweisen Beschichtung wenigstens einer mit wenigstens einer Grundierungsschicht beschichteten Metalloberfläche eines Substrats mit einer Decklackschicht unter Einsatz der wässrigen Beschichtungszusammensetzung und ein durch ein solches Verfahren erhältliches zumindest teilweise beschichtetes Substrat.

Zur Herstellung von flachen und dünnwandigen metallischen Bauteilen wie beispielsweise Automobil-Bauteilen und Karosserie-Bauteilen, aber auch entsprechenden Bauteilen aus dem Bereich der Geräteverkleidungen, Fassadenverkleidungen, Deckenverkleidungen oder Fensterprofilen werden geeignete Metallbleche wie beispielsweise Stahl- oder Aluminiumbleche mittels konventioneller Techniken wie Stanzen und/oder Bohren ausgeformt. Größere metallische Bauteile werden gegebenenfalls durch Verschweißen mehrerer Einzelteile zusammengefügt. Als Rohmaterial zur Herstellung solcher Bauteile werden üblicherweise lange Metallbänder eingesetzt, die durch Walzen des jeweiligen Metalls hergestellt und zum Lagern und zum besseren Transport zu Rollen ("Coils") aufgewickelt werden.

Die DE 40 10 176 A1 betrifft ein Verfahren zur Herstellung einer mehrschichtigen Lackierung und einen wässrigen Lack. Der wässrige Lack enthält als Bindemittel ein Polymer, das erhältlich ist, indem in einem organischen Lösemittel oder einem Gemisch organischer Lösemittel ethylenisch ungesättigte Monomere oder ein Gemisch ethylenisch ungesättigter Monomere in Gegenwart eines Polyurethanharzes, das ein zahlenmittleres Molekulargewicht von 200 bis 30.000 aufweist und das im statistischen Mittel pro Molekül 0,01 bis 1,1 polymerisierbare Doppelbindungen erhält, polymerisiert werden und das so erhaltene Reaktionsprodukt in eine wässrige Dispersion überführt wird.

Die WO 96/12747 offenbart die Herstellung von wässrigen pigmentierten Lacken enthaltend polyurethan-modifizierte Polyacrylate.

Die WO 01/04222 betrifft wässrige Beschichtungsstoffe enthaltend mindestens einen wasserlöslichen oder wasserdispergierbaren Polyester, mindestens ein wasserlösliches oder wasserdispergierbares Polyurethanacrylat, mindestens ein Aminoplastharz, das als solches oder in Gegenwart der vorgenannten Bestandteile wasserlöslich oder wasserdispergierbar ist und mindestens ein farb- oder effektgebendes Pigment und/oder einen Füllstoff.

Die WO 2009/100938 A1 offenbart Beschichtungsmittelzusammensetzungen auf Wasserbasis, umfassend mindestens eine Harzzusammensetzung für eine Beschichtungszusammensetzung auf Wasserbasis und als Rheologiehilfsmittel mindestens ein Polyamid und mindestens einen Acrylatverdicker auf Poly(meth)acrylsäure-Basis.

Die DE 40 09 858 A1 betrifft Basislacke zur Herstellung von Lackierungen des Basecoat-Clearcoat-Typs, die ein wasserverdünnbares Polyacrylatharz enthalten, das erhältlich ist, indem in einem organischen Lösemittel in einer ersten Stufe Carboxylgruppen-freie ethylenisch ungesättigte Monomere polymerisiert werden und nach dem mindestens 80 Gew.-% dieser Monomere umgesetzt worden sind, in einer zweiten Stufe Carboxylgruppen-haltige Monomere polymerisiert werden und das so erhaltene Polyacrylatharz neutralisiert wird.

Die genannten metallischen Bauteile müssen dabei üblicherweise gegen Korrosion geschützt werden. Gerade im Automobilbereich sind die Anforderungen an den Korrosionsschutz sehr hoch, insbesondere da seitens der Hersteller oftmals über viele Jahre eine Garantie gegen Durchrostung gewährt wird.

Die Korrosionsschutzbehandlung kann dabei am fertigen metallischen Bauteil wie beispielsweise einer zusammengeschweißten Automobilkarosserie vorgenommen werden. In zunehmendem Maße wird die Korrosionsschutzbehandlung jedoch heutzutage zu einem früheren Zeitpunkt, nämlich bereits an den zur Herstellung dieser Bauteile eingesetzten Metallbändern mittels des "Coil-Coating-Verfahrens" vorgenommen.

Unter "Coil-Coating" (Bandbeschichtung) versteht man das kontinuierliche ein- oder beidseitige Beschichten von flachen gewalzten Metallbändern wie beispielsweise von Stahl- oder Aluminiumbändern mit üblicherweise flüssigen Beschichtungszusammensetzungen mit Geschwindigkeiten von ungefähr 60 bis 200 m/min. Die Bandbeschichtung erfolgt dabei üblicherweise im Walzenauftrag mit gegenläufigen Walzen. Die Metallbänder weisen nach Durchführung des Coil-Coating-Verfahrens in der Regel mehrere unterschiedliche Lackschichten auf, von denen wenigstens eine für einen ausreichenden Korrosionsschutz verantwortlich ist. Üblicherweise erfolgt nach einem optionalen Reinigungsschritt des Metallbandes und einer Auftragung einer dünnen Vorbehandlungsschicht auf das Metallband das Aufbringen einer Grundierungsschicht ("primer") auf die Vorbehandlungsschicht, gefolgt von dem Auftragen wenigstens einer Decklackschicht auf die Grundierungsschicht (2-Schritt-Auftrag). Alternativ kann anstelle des nacheinander erfolgenden Aufbringens der Vorbehandlungsschicht und der Grundierung auch die Auftragung von insgesamt nur einer Grundierungsschicht erfolgen, die eine Kombination aus einer im 2-Schritt-Auftrag aufgebrachten Vorbehandlungs- und Grundierungsschicht darstellt, auf die dann wenigstens eine Decklackschicht aufgebracht wird (1-Schritt-Auftrag). Ein aus dem Stand der Technik bekanntes Coil-Coating-Verfahren ist beispielsweise in WO 2006/079628 A2 offenbart. Da die Metall-(Weiter-)Verarbeitung der so beschichteten Metallbänder üblicherweise erst nach der Lackierung mittels des Coil-Coating-Verfahrens erfolgt, müssen die hierfür eingesetzten Lacke, insbesondere Decklacke, eine sehr hohe mechanische und je nach Einsatzzweck zudem eine sehr hohe Wetter- und/oder Chemikalien-Beständigkeit aufweisen, insbesondere da sie oftmals im Außenbereich eingesetzt werden.

Nachteilig an den im Coil-Coating-Verfahren insbesondere zum Auftrag wenigstens einer Decklackschicht üblicherweise eingesetzten flüssigen Beschichtungszusammensetzungen ist deren Gehalt an organischen Lösemitteln, insbesondere deren Gehalt an schwerflüchtigen organischen Lösemitteln. Die Gegenwart dieser organischen Lösemittel ist üblicherweise notwendig, um ein Auftreten von Kochern, d.h. ein Auftreten von noch geschlossenen oder bereits geplatzten Blasen innerhalb der jeweiligen aufzutragenden Schicht zu verhindern. Solche Kocher können während der Trocknung bzw. während des Einbrennens der jeweiligen Schicht, insbesondere der Decklackschicht, durch zu schnell verdunstende Lösemittel oder Spaltprodukte aus der chemischen Vernetzung hervorgerufen werden, weswegen den jeweiligen Beschichtungszusammensetzungen üblicherweise schwerflüchtige organische Lösemittel wie beispielsweise langkettige Alkohole wie Dodecylalkohol, langkettige Glykole, aromatische Verbindungen oder Alkane zugesetzt werden, um eine Kocherbildung zu verhindern, was jedoch aus ökologischen Gründen bedenklich ist. Die Gegenwart von üblicherweise eingesetzten organischen Lösemitteln ist zudem notwendig, um durch eine gute Benetzung gute Haftungseigenschaften der resultierenden Lackschicht, insbesondere Decklackschicht, zu der darunterliegenden Beschichtung wie einer Grundierungsschicht zu gewährleisten. Zudem ist die Gegenwart von eingesetzten organischen Lösemitteln insbesondere in den zur Herstellung von Decklackzusammensetzungen eingesetzten Beschichtungszusammensetzungen üblicherweise notwendig, weil rein wässrige herkömmliche Beschichtungszusammensetzungen, die herkömmliche in wässrigen Systemen einsetzbare Bindemittel enthalten, eine ausreichende Temperaturstabilität, Chemikalien- und Wasserbeständigkeit und/oder eine ausreichende UV-Stabilität der daraus resultierenden Decklackschichten nicht gewährleisten.

Es besteht jedoch ein Bedarf an in einem Verfahren wie dem Coil-Coating Verfahren, insbesondere zur Herstellung der Decklackschicht, einzusetzenden flüssigen Beschichtungszusammensetzungen, die ökologisch unbedenklicher sind als die üblicherweise eingesetzten Zusammensetzungen, d.h. die im Wesentlichen frei von organischen Lösemitteln, insbesondere schwerflüchtigen organischen Lösemitteln, sind, aber dennoch dazu geeignet sind, das Auftreten von Kochern zu verhindern. Es besteht ferner ein Bedarf an solchen Beschichtungszusammensetzungen, die sich zur Herstellung von Beschichtungen wie Decklackschichten eignen, wobei diese Beschichtungen hinsichtlich Temperaturstabilität und/oder UV-Stabilität sowie Haftungseigenschaften gegenüber aus herkömmlich eingesetzten lösemittel-haltigen Beschichtungszusammensetzungen erhaltenen Beschichtungen keine Nachteile aufweisen.

Eine Aufgabe der vorliegenden Erfindung ist es daher, eine flüssige Beschichtungszusammensetzung zur Verfügung zu stellen, welche sich insbesondere zur Herstellung einer Decklackschicht im Coil-Coating-Verfahren eignet und zudem eine korrosionsschutzverbessernde Wirkung aufweist. Insbesondere ist es eine Aufgabe der vorliegenden Erfindung, eine solche flüssige Beschichtungszusammensetzung bereitzustellen, welche keine Nachteile und insbesondere Vorteile gegenüber herkömmlichen im Coil-Coating Verfahren zur Herstellung einer Decklackschicht eingesetzten flüssigen Beschichtungszusammensetzungen aufweist. Insbesondere ist es zudem eine Aufgabe der vorliegenden Erfindung, eine solche flüssige Beschichtungszusammensetzung zur Verfügung zu stellen, welche ökologisch unbedenklicher, insbesondere im Wesentlichen frei von organischen Lösemitteln, ist als die üblicherweise eingesetzten Zusammensetzungen, aber dennoch mindestens in gleichem Maße dazu geeignet ist, das Auftreten von Oberflächenstörungen wie Kochern zu verhindern, insbesondere dann, wenn Decklackschichten erwünscht sind, die eine Trockenschichtdicke von höchstens 25 $\mu$m oder von höchstens 20 $\mu$m aufweisen. Insbesondere ist es zudem eine Aufgabe der vorliegenden Erfindung, eine solche flüssige Beschichtungszusammensetzung zur Verfügung zu stellen, die zur Herstellung von Beschichtungen wie Decklackschichten eingesetzt werden kann, welche keine Nachteile hinsichtlich des Eintritts von UV-Licht und/oder des Aussetzens gegenüber hohen oder sehr geringen Temperaturen aufweisen und sich nicht leicht von der darunter liegenden Grundierung ablösen lassen.

Diese Aufgabe wird gelöst durch eine wässrige Dispersion (P) wenigstens zweier voneinander verschiedener polymerer Harze (P1) und (P2), wobei

das polymere Harz (P1) ein Copolymer ist, welches durch Copolymerisation von ethylenisch ungesättigten Monomeren in Gegenwart wenigstens eines polymerisierbare Kohlenstoff-Doppelbindungen aufweisenden Polyurethan-Harzes erhältlich ist, und

das polymere Harz (P2) ein funktionelle Hydroxyl-Gruppen aufweisender Polyester ist, welcher eine Säure-Zahl von <25 mg KOH pro g an Polyester aufweist,

dadurch gekennzeichnet, dass die wässrige Dispersion (P) erhältlich ist durch ein Verfahren umfassend wenigstens die Schritte (1), (2), (3) und (4), nämlich

(1) Herstellen einer Dispersion oder Lösung des wenigstens einen polymeren Harzes (P1) in wenigstens einem organischen Lösemittel,

(2) Herstellen einer Mischung aus der nach Schritt (1) erhaltenen Dispersion oder Lösung und einer Schmelze oder Lösung des wenigstens einen polymeren Harzes (P2),

(3) Zugeben von Wasser zu der nach Schritt (2) erhaltenen Mischung und

(4) Entfernen des organischen Lösemittels aus der nach Schritt (3) erhaltenen Mischung unter Erhalt der wässrigen Dispersion (P).

Ein erster Gegenstand der vorliegenden Erfindung ist daher eine solche erfindungsgemäße wässrige Dispersion (P) wenigstens zweier voneinander verschiedener polymerer Harze (P1) und (P2).

Es wurde überraschend gefunden, dass sich eine solche wässrige Dispersion (P) als Teil einer Bindemittel-Komponente in einer wässrigen Beschichtungszusammensetzung eignet, welche insbesondere zum Aufbringen einer Decklackschicht auf geeignete Substrate eingesetzt werden kann.

Insbesondere wurde überraschend gefunden, dass es das zur Herstellung der erfindungsgemäßen wässrigen Dispersion (P) eingesetzte Verfahren umfassend wenigstens die Schritte (1), (2), (3) und (4) ermöglicht, das polymere Harz (P2), welches bislang ausschließlich als Teil einer Bindemittel-Komponente in herkömmlichen lösemittel-basierten Beschichtungszusammensetzungen eingesetzt werden konnte, die zur Herstellung von Decklackschichten - beispielsweise im Coil-Coating-Verfahren - geeignet sind, in Kombination mit dem polymeren Harz (P1) auch für einen Einsatz als Bindemittel-Komponente in wässrigen Beschichtungszusammensetzungen zur Verfügung zu stellen.

Es wurde zudem überraschend gefunden, dass es nur die genannten Verfahrensschritte (1) bis (4) ermöglichen, eine homogene wässrige Dispersion der polymeren Harze (P1) und (P2) bereitzustellen.

Ein weiterer Gegenstand der vorliegenden Erfindung ist daher eine wässrige Beschichtungszusammensetzung umfassend

(A1) wenigstens die erfindungsgemäße wässrige Dispersion (P) wenigstens zweier voneinander verschiedener polymerer Harze (P1) und (P2),

(A2) wenigstens ein Vernetzungsmittel,

(A3) wenigstens ein Pigment und

(A4) gegebenenfalls wenigstens ein Additiv

zur zumindest teilweisen Beschichtung wenigstens einer mit wenigstens einer Grundierungsschicht beschichteten Metalloberfläche eines Substrats mit einer Decklackschicht.

Vorzugsweise ist die erfindungsgemäße wässrige Beschichtungs-zusammensetzung somit eine Decklackbeschichtungszusammensetzung, welche vorzugsweise zur zumindest teilweisen Beschichtung wenigstens einer mit wenigstens einer Grundierungsschicht beschichteten Metalloberfläche eines Substrats mit einer Decklackschicht im Coil-Coating-Verfahren eingesetzt wird.

Die erfindungsgemäße Beschichtungszusammensetzung enthält dabei aufgrund der in ihr enthaltenen Komponenten (A1) und (A2) wenigstens ein Bindemittel (A). Dieses Bindemittel (A) umfasst insbesondere das wenigstens eine Vernetzungsmittel (A2) und die in der als Komponente (A1) eingesetzten wässrigen Dispersion (P) enthaltenen wenigstens zwei polymeren Harze (P1) und (P2).

Es wurde überraschend gefunden, dass sich die erfindungsgemäße wässrige Beschichtungszusammensetzung insbesondere im Coil-Coating-Verfahren zur zumindest teilweisen Beschichtung wenigstens einer mit wenigstens einer Grundierungsschicht beschichteten Metalloberfläche eines Substrats mit einer Decklackschicht eignet.

Es wurde ferner überraschend gefunden, dass durch die speziellen Bestandteile der erfindungsgemäßen Beschichtungszusammensetzung, insbesondere durch die Gegenwart der Komponente (A1) in der wässrigen Beschichtungszusammensetzung das Auftreten von Oberflächenstörungen innerhalb der aufgetragenen Lackschicht, wie beispielsweise von Nadelstichen ("pinholes") oder Kochern, insbesondere von Kochern, verhindert werden kann. Insbesondere wurde überraschenderweise gefunden, dass keine solche Kocherbildung auftritt, obwohl es sich bei der erfindungsgemäßen Beschichtungszusammensetzung um eine wässrige Beschichtungszusammensetzung handelt, d.h. um eine solche Zusammensetzung, die im Wesentlichen frei von organischen Lösemitteln ist, obwohl üblicherweise gerade solche herkömmlichen lösemittel-haltigen Beschichtungszusammensetzungen eingesetzt werden müssen, um eine solche Kocherbildung zu verhindern.

Es wurde zudem überraschend gefunden, dass sich die erfindungsgemäße wässrige Beschichtungszusammensetzung durch eine gute Nasshaftfestigkeit und durch eine korrosionsschutzverbessernde Wirkung auszeichnet. Zudem zeichnet sich die erfindungsgemäße Beschichtungszusammensetzung generell dadurch aus, dass sie wässrig und somit ökologisch unbedenklicher als herkömmliche organische Lösemittel enthaltende Beschichtungszusammensetzungen ist.

Es wurde ferner überraschend festgestellt, dass die erfindungsgemäße wässrige Beschichtungszusammensetzung es ermöglicht, Decklackschichten mit den vorstehend beschriebenen vorteilhaften Eigenschaften, insbesondere ohne Kocherbildung, in Trockenschichtdicken von insbesondere bis höchstens 25 μm oder bis höchstens 20 μm, wie beispielsweise in einem Bereich von 10 bis 25 μm oder in einem Bereich von 10 bis 20 μm, bereitzustellen, insbesondere im Coil-Coating-Verfahren.

Ferner wurde zudem überraschend gefunden, dass sich die erfindungsgemäße wässrige Beschichtungszusammensetzung zur Herstellung von Beschichtungen wie Decklackschichten eignet, wobei sich die resultierende Beschichtung durch gute Haftungseigenschaften zu der darunterliegenden Schicht wie einer Grundierungsschicht auszeichnet und sich zudem durch einen guten Glanz auszeichnet. Darüber hinaus zeichnet sich die resultierende Beschichtung durch eine gute Temperaturstabilität und/oder UV-Stabilität aus.

Die Begriffe "Kocher", "Nadelstiche", "Nasshaftfestigkeit", "Verlaufsstörungen", "Coil-Coating" bzw. "Bandbeschichtung", sowie "Coil-Coating-Lacke" sind dem Fachmann bekannt und beispielsweise definiert im Römpp Lexikon, Lacke und Druckfarben, Georg Thieme Verlag 1998.

Der Begriff "umfassend" im Sinne der vorliegenden Erfindung, beispielsweise in Zusammenhang mit der erfindungsgemäßen wässrigen Dispersion (P) und der erfindungsgemäßen wässrigen Beschichtungszusammensetzung, hat in einer bevorzugten Ausführungsform die Bedeutung "bestehend aus". Dabei können - hinsichtlich der erfindungsgemäßen wässrigen Dispersion (P) - in dieser bevorzugten Ausführungsform neben den Komponenten Wasser, (P1) und (P2) eine oder mehrere der weiteren nachstehend genannten optional in der erfindungsgemäßen wässrigen Dispersion (P) enthaltenen Komponenten wie beispielsweise (A4) enthalten sein. Dabei können - hinsichtlich der erfindungsgemäßen wässrigen erfindungsgemäßen Beschichtungszusammensetzung - in dieser bevorzugten Ausführungsform neben den Komponenten (A1), (A2) und (A3) gegebenenfalls zudem (A4) und/oder weiteres Wasser in der erfindungsgemäßen Beschichtungszusammensetzung enthalten sein. Alle Komponenten können jeweils in einer ihrer nachstehend genannten bevorzugten Ausführungsformen in der erfindungsgemäßen Beschichtungszusammensetzung bzw. in der erfindungsgemäßen wässrigen Dispersion (P) enthalten sein.

Vorzugsweise addieren sich die Anteile in Gew.-% der in der erfindungsgemäßen wässrigen Dispersion (P) enthaltenen polymeren Harze (P1) und (P2) sowie Wasser auf 100 Gew.-%, bezogen auf das Gesamtgewicht der wässrigen Dispersion (P).

Vorzugsweise addieren sich die Anteile in Gew.-% der in der erfindungsgemäßen Beschichtungszusammensetzung enthaltenen Komponenten (A1), (A2), (A3) und gegebenenfalls (A4) sowie Wasser auf 100 Gew.-%, bezogen auf das Gesamtgewicht der Beschichtungszusammensetzung.

Die erfindungsgemäße wässrige Dispersion (P) und die erfindungsgemäße wässrige Beschichtungszusammensetzung enthalten jeweils als flüssiges Verdünnungsmittel Wasser.

Unter dem Begriff "wässrig" im Zusammenhang mit der erfindungsgemäßen wässrigen Dispersion (P) und der erfindungsgemäßen Beschichtungszusammensetzung werden vorzugsweise solche Dispersionen (P) bzw. Beschichtungszusammensetzungen verstanden, die - als flüssiges Verdünnungsmittel, d.h. als flüssiges Lösemittel und/oder Dispergiermittel - Wasser als Hauptkomponente enthalten und somit zumindest im Wesentlichen frei von organischen Lösemitteln sind. Gegebenenfalls können die erfindungsgemäßen Dispersionen (P) und die erfindungsgemäßen Beschichtungszusammensetzungen jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon (MEK), Methylisobutylketon (MIBK), Aceton, Isophoron oder Mischungen davon genannt, insbesondere Methylethylketon (MEK) und/oder Methylisobutylketon (MIBK). Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in der erfindungsgemäßen wässrigen Dispersion (P) bzw. der in der erfindungsgemäßen Beschichtungszusammensetzung enthaltenen flüssigen Verdünnungsmitteln, d.h. flüssigen Lösemitteln und/oder Dispergiermitteln. Insbesondere liegen jedoch keine organischen Lösemittel in der erfindungsgemäßen wässrigen Dispersion (P) und der erfindungsgemäßen Beschichtungszusammensetzung vor, d.h. die erfindungsgemäße Dispersion (P) bzw. die erfindungsgemäße Beschichtungszusammensetzung enthält Wasser als einziges Verdünnungsmittel.

**Wässrige Dispersion (P)**

Die erfindungsgemäße wässrige Dispersion (P) ist erhältlich durch ein Verfahren umfassend wenigstens die Schritte (1), (2), (3) und (4), nämlich

(1) Herstellen einer Dispersion oder Lösung, vorzugsweise Dispersion, des wenigstens einen polymeren Harzes (P1) in wenigstens einem organischen Lösemittel,

(2) Herstellen einer Mischung aus der nach Schritt (1) erhaltenen Dispersion oder Lösung, vorzugsweise Dispersion, und einer Schmelze oder Lösung, vorzugsweise Schmelze, des wenigstens einen polymeren Harzes (P2),

(3) Zugeben von Wasser zu der nach Schritt (2) erhaltenen Mischung und

(4) Entfernen des organischen Lösemittels aus der nach Schritt (3) erhaltenen Mischung unter Erhalt der wässrigen Dispersion (P).

Vorzugsweise umfasst das Verfahren zudem einen Schritt (2a), der zwischen den Schritten (2) und (3) durchgeführt wird, nämlich eine zumindest teilweise Neutralisation des nach Schritt (2) erhaltenen Zwischenprodukts durch die Zugabe wenigstens eines Neutralisationsmittels wie beispielsweise wenigstens eines geeigneten gegebenenfalls OH-Gruppen aufweisenden Amins, welches zum Beispiel 1 bis 12 Kohlenstoffatome tragen kann. Ein Beispiel eines solchen Amins ist Dimethylethanolamin.

In Schritt (1) kann grundsätzliches jedes geeignete organische Lösemittel eingesetzt werden. Als Beispiele für solche organischen Lösemittel seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon (MEK), Methylisobutylketon (MIBK), Aceton, Isophoron oder Mischungen davon genannt, insbesondere Methylethylketon (MEK) und/oder Methylisobutylketon (MIBK).

Schritt (1) und/oder Schritt (2) und/oder Schritt (2a) wird vorzugsweise bei einer Temperatur im Bereich von 60 bis 180°C durchgeführt, insbesondere bei einer Temperatur im Bereich von 90 bis 150°C.

Vorzugsweise wird in Schritt (2) die nach Schritt (1) erhaltene Dispersion oder Lösung vorgelegt und zu dieser die Schmelze oder Lösung, vorzugsweise Schmelze, des wenigstens einen polymeren Harzes (P2) gegeben. Wird eine Lösung des wenigstens einen polymeren Harzes (P2) in Schritt (2) eingesetzt, so handelt es sich dabei vorzugsweise um eine Lösung von (P2) in wenigstens einem organischen Lösemittel.

In Schritt (3) wird vorzugsweise deionisiertes Wasser eingesetzt. Die nach Schritt (3) erhaltene Mischung ist vorzugsweise eine Dispersion.

Schritt (4) kann beispielsweise durch Anlegen eines verminderten Drucks oder durch Abdestillieren bei erhöhter Temperatur und/oder im Vakuum erfolgen. Die nach Schritt (4) erhaltene wässrige Dispersion (P) kann gegebenenfalls aufgrund der in Schritt (1) eingesetzten lösemittelhaltigen Dispersion oder Lösung einen geringen Anteil an organischem Lösemittel wie beispielsweise MEK und/oder MIBK enthalten, der jedoch höchstens in einem Bereich von 0,2 bis 1,5 Gew.-%, vorzugsweise von 0,2 bis 1,0 Gew.-%, besonders bevorzugt von 0,2 bis 0,6 Gew.-%, jeweils bezogen auf das Gesamtgewicht der wässrigen Dispersion (P), liegt.

Das relative Gewichtsverhältnis der polymeren Harze (P1) und (P2) zueinander in der wässrigen Dispersion (P), jeweils bezogen auf deren Festkörpergehalt, liegt vorzugsweise in einem Bereich von 5:1 bis 1:5, besonders bevorzugt in einem Bereich von 4:1 bis 1:4, ganz besonders bevorzugt in einem Bereich von 3:1 bis 1:3, insbesondere bevorzugt in einem Bereich von 2:1 bis 1:2, noch bevorzugter in einem Bereich von 1,5:1 bis 1:1,5 oder in einem Bereich von 1,2:1 bis 1:1,2.

Vorzugsweise weist die erfindungsgemäße wässrige Dispersion (P) einen Festkörpergehalt im Bereich von 30 bis 80 Gew.-%, besonders bevorzugt von 35 bis 75 Gew.-%, ganz besonders bevorzugt von 40 bis 70 Gew.-%, insbesondere bevorzugt von 40 bis 65 Gew.-%, jeweils bezogen auf das Gesamtgewicht der Dispersion (P) auf.

Vorzugsweise ist die erfindungsgemäße wässrige Dispersion (P) eine homogene Dispersion. Vorzugsweise weisen die in der erfindungsgemäßen wässrigen Dispersion (P) enthaltenen Teilchen einen mittleren Teilchendurchmesser im Bereich von 100 bis 500 nm, besonders bevorzugt von 150 bis 400 nm, ganz besonders bevorzugt von 150 bis 250 nm auf. Es handelt sich dabei um den auf das Probenvolumen bezogenen mittleren Teilchendurchmesser ($D_{50}$-Median-Wert), bestimmt mittels des Geräts Mastersizer 2000 der Firma Malvern Instruments Ltd, UK durch Laserbeugung in Ethanol.

*Polymeres Harz P1*

Das polymere Harz (P1) ist ein Copolymer, welches durch Copolymerisation von ethylenisch ungesättigten Monomeren in Gegenwart wenigstens eines polymerisierbare Kohlenstoff-Doppelbindungen aufweisenden Polyurethan-Harzes erhältlich ist. Solche Copolymere sind beispielsweise aus WO 91/15528 A1 bekannt und können daher vom Fachmann ohne weiteres hergestellt werden.

Das zur Herstellung der erfindungsgemäßen wässrigen Dispersion (P) eingesetzte polymere Harz (P1) ist vorzugsweise ein in wenigstens einem organischen Lösemittel gelöstes oder dispergiertes polymeres Harz (P1). Eine entsprechende Dispersion eines solchen polymeren Harzes (P1) weist vorzugsweise einen nicht-flüchtigen Anteil, d.h. einen Festkörper-Anteil, im Bereich von 35 bis 80 Gew.-%, besonders bevorzugt im Bereich von 40 bis 75 Gew.-%, ganz besonders bevorzugt im Bereich von 45 bis 75 Gew.-%, am meisten bevorzugt im Bereich von 50 bis 70 Gew.-%, jeweils bezogen auf das Gesamtgewicht der Dispersion auf.

Vorzugsweise weist das polymere Harz (P1) ein gewichtsmittleres Molekulargewicht von 2 000 bis 100 000 g/mol, besonders bevorzugt von 5 000 bis 80 000 g/mol, ganz besonders bevorzugt von 15 000 bis 60 000 g/mol, insbesondere von 30 000 bis 55 000 g/mol oder von 35 000 bis 50 000 g/mol auf. Die Bestimmungsmethode zur Ermittlung des gewichtsmittleren Molekulargewichts ist nachstehend beschrieben.

Vorzugsweise weist das polymere Harz (P1) ein zahlenmittleres Molekulargewicht von 100 bis 50 000 g/mol, besonders bevorzugt von 1 000 bis 40 000 g/mol, ganz besonders bevorzugt von 2 500 bis 25 000 g/mol, insbesondere von 3 000 bis 20 000 g/mol oder von 4 000 bis 15 000 g/mol auf. Die Bestimmungsmethode zur Ermittlung des zahlenmittleren Molekulargewichts ist nachstehend beschrieben.

Vorzugsweise weist das polymere Harz (P1) eine Säurezahl von 5 bis 200, besonders bevorzugt von 10 bis 150, ganz besonders bevorzugt von 15 bis 100, insbesondere von 20 bis 50 oder von 25 bis 40, mg KOH pro g polymeres Harz (P1) auf. Die Bestimmungsmethode zur Ermittlung der Säure-Zahl ist nachstehend beschrieben.

Das erfindungsgemäß eingesetzt polymere Harz (P1) weist vorzugsweise funktionelle OH-Gruppen auf. Vorzugsweise weist das polymere Harz (P1) eine OH-Zahl (Hydroxyl-Zahl) von 5 bis 100, besonders bevorzugt von 10 bis 90, ganz besonders bevorzugt von 20 bis 80, insbesondere von 30 bis 70 oder von 40 bis 60, mg KOH pro g polymeres Harz (P1) auf. Die Bestimmungsmethode zur Ermittlung der Hydroxyl-Zahl ist nachstehend beschrieben.

Das zur Herstellung des polymeren Harzes (P1) eingesetzte polymerisierbare Kohlenstoff-Doppelbindungen aufweisende Polyurethan-Harz weist vorzugsweise im statistischen Mittel pro Molekül 0,05 bis 1,1, vorzugsweise 0,2 bis 0,9, besonders bevorzugt 0,3 bis 0,7 polymerisierbare Kohlenstoff-Doppelbindungen auf. Es ist bevorzugt, dass das zur Herstellung des polymeren Harzes (P1) eingesetzte Polyurethan-Harz eine Säurezahl von 0 bis 2 mg KOH pro g Polyurethan-Harz aufweist.

Vorzugsweise ist das zur Herstellung des polymeren Harzes (P1) eingesetzte polymerisierbare Kohlenstoff-Doppelbindungen aufweisende Polyurethan-Harz wenigstens erhältlich durch Reaktion wenigstens eines Polyisocyanats mit wenigstens einem Polyol, besonders bevorzugt mit wenigstens einem Polyester-Polyol.

Als Polyisocyanate wie beispielsweise als Diisocyanate werden bevorzugt (hetero)aliphatische, (hetero)cycloaliphatische, (hetero)aromatische oder (hetero)aliphatisch-(hetero)aromatische Diisocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), 1,3-Bis(1-isocyanato-1-methylethyl)benzol, Diphenylmethandiisocyanat (MDI), 1,9-Diisocyanato-5-methylnonan, 1,8-Diisocyanato-2,4-dimethyloctan, 1,12-Dodecandiisocyanat, $\omega,\omega'$-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethylcyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat ($H_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, $\omega,\omega'$-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Naphthylendiisocyanat, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Ganz besonders bevorzugt sind 2,4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI) und/oder 1,6-Hexamethylendiisocyanat (HDI). Insbesondere bevorzugt ist HDI als zur Herstellung des Polyurethan-Harzes eingesetztes Polyisocyanat.

Als Polyol-Komponente des zur Herstellung des polymeren Harzes (P1) eingesetzten polymerisierbare Kohlenstoff-Doppelbindungen aufweisenden Polyurethan-Harzes werden vorzugsweise Polyester-Polyole und/oder Polyether-Polyole eingesetzt. Besonders bevorzugt sind Polyester-Polyole. Vorzugsweise ist das erfindungsgemäß eingesetzte Polyurethan-Harz daher ein Polyester-Polyurethanharz. Vorzugsweise wird somit ein Polyester-Polyol als Präpolymer-Polyol-Komponente eingesetzt. Als Polyester-Polyole eignen sich insbesondere solche Verbindungen, die sich von wenigstens einem Polyol wie wenigstens einem Diol, beispielsweise Ethylenglykol, Propylenglykol (1,2-Propandiol), Trimethylenglykol (1,3-Propandiol), Neopentylgylkol, 1,4-Butandiol und/oder 1,6-Hexandiol, oder wie wenigstens einem Triol wie 1,1,1-Trimethylolpropan (TMP), und wenigstens einer Dicarbonsäure wie beispielsweise Adipinsäure, Terephthalsäure, Isophthalsäure, ortho-Phthalsäure und/oder Dimethylolpropionsäure und/oder wenigstens einem Dicarbonsäurederivat wie einem Dicarbonsäureester und/oder einem Dicarbonsäureanhydrid wie Phthalsäureanhydrid, ableiten. Insbesondere bevorzugt ist ein solches als Präpolymer-Polyol-Komponente eingesetztes Polyester-Polyol, welches sich von wenigstens einem Diol und/oder Triol ausgewählt aus der Gruppe bestehend aus 1,6-Hexandiol, Neopentylglycol, Trimethylolpropan und Mischungen davon, und wenigstens einer Dicarbonsäure (oder wenigstens einem Dicarbonsäurederivat davon) ausgewählt aus der Gruppe bestehend aus Adipinsäure, Terephthalsäure, Isophthalsäure, ortho-Phthalsäure Dimethylolpropionsäure und Mischungen davon, ableitet. Vorzugsweise wird wenigstens ein solches Polyester-Polyol mit wenigstens einem Polyisocyanat, insbesondere mit HDI und/oder IPDI zur Herstellung des polymeren Harzes (P1) eingesetzt.

Das zur Herstellung des polymeren Harzes (P1) eingesetzte Polyurethan-Harz weist polymerisierbare Kohlenstoff-Doppelbindungen als reaktive funktionelle Gruppen auf, welche eine Vernetzungsreaktion ermöglichen. Vorzugsweise sind diese reaktiven funktionellen Gruppen ausgewählt aus der Gruppe bestehend aus Vinyl-Gruppen wie Allyl-Gruppen und (Meth)acrylat-Gruppen sowie Mischungen davon. Besonders bevorzugt sind Vinyl-Gruppen wie Allyl-Gruppen, insbesondere Allylether-Gruppen.

Um bei der Herstellung des wenigstens einen zur Herstellung des polymeren Harzes (P1) eingesetzten Polyurethan-Harzes polymerisierbare Kohlenstoff-Doppelbindungen als reaktive funktionelle Gruppen in das Polymer einzuführen, wird zur Herstellung des Polyurethan-Harzes neben dem wenigstens einen Polyisocyanat und dem wenigstens einen Polyol wie beispielsweise dem wenigstens einen Polyester-Polyol, zudem wenigstens ein weiteres Poylol wie wenigstens ein Diol als Monomer eingesetzt, welches wenigstens eine polymerisierbare Kohlenstoff-Doppelbindung als reaktive funktionelle Gruppe aufweist und vorzugsweise zudem wenigstens eine gegenüber Isocyanat-Gruppen reaktive Gruppe wie beispielsweise wenigstens eine Hydroxyl-Gruppe aufweist. Vorzugsweise wird wenigstens ein Diol als Monomer eingesetzt, welches zudem wenigstens eine polymerisierbare Kohlenstoff-Doppelbindung als reaktive funktionelle Gruppe aufweist, besonders bevorzugt eine reaktive funktionelle Gruppe ausgewählt aus der Gruppe bestehend aus Vinyl-Gruppen wie Allyl-Gruppen, Allyether-Gruppen und (Meth)acrylat-Gruppen sowie Mischungen davon. Besonders bevorzugt sind Vinyl-Gruppen, insbesondere Allylether-Gruppen. Ein solches bevorzugt eingesetztes Monomer ist Trimethylolpropan-Monoallylether. Alternativ und/oder zusätzlich kann auch wenigstens ein Polyol ausgewählt aus der Gruppe bestehend aus Glycerinmonoallylether, Pentaerythritmono- und Pentaerythritdiallylether und Mischungen davon, eingesetzt werden.

Vorzugsweise werden die im zur Herstellung des polymeren Harzes (P1) eingesetzten Polyurethan-Harz enthaltenen polymerisierbaren Kohlenstoff-Doppelbindungen somit über Wahl einer geeigneten Polyol-Komponente, insbesondere Diol-Komponente als Monomer in das Polyurethan-Harz eingeführt. Wenigstens eine entsprechende polymerisierbare Kohlenstoff-Doppelbindung ist daher bereits in diesen Monomeren enthalten. Besonders bevorzugt weist das zur Herstellung des polymeren Harzes (P1) eingesetzte Polyurethan-Harz Allylether-Gruppen als polymerisierbare Kohlenstoff-Doppelbindungen auf, die vorzugsweise durch Wahl von Trimethylolpropanmonoallylether als Polyol-Komponente in das Polyurethan-Harz eingebaut worden sind. Gegebenenfalls können in dem so erhaltenen Polyurethan-Segment noch enthaltene Isocyanat-Gruppen durch Reaktion mit wenigstens einem Polyol wie Trimethylolpropan umgesetzt werden, bis keine Isocyanat-Gruppen mehr nachgewiesen werden können. Gegebenenfalls kann das Polyurethan-Segment durch Zugabe wenigstens eines Katalysators wie Dibutylzinndilaurat hergestellt werden. Vorzugsweise erfolgt die Herstellung des Polyurethan-Segments in einem organischen Lösemittel wie beispielsweise Methylethylketon (MEK) und/oder Methylisobutylketon (MIBK).

Zur Herstellung des erfindungsgemäß eingesetzten polymeren Harzes (P1) wird das so erhaltene wenigstens eine polymerisierbare Kohlenstoff-Doppelbindung aufweisende Polyurethan-Harz in Gegenwart von ethylenisch ungesättigten Monomeren copolymerisiert. Gegebenenfalls können noch weitere Monomere mit einpolymerisiert werden, die keine polymerisierbaren Kohlenstoff-Doppelbindungen aufweisen.

Als ethylenisch ungesättigten Monomere zur Herstellung des polymeren Harzes (P1) einsetzbare Monomere sind vorzugsweise ausgewählt aus der Gruppe bestehend aus aliphatischen und cycloaliphatischen Estern der Acrylsäure oder Methacrylsäure ((Meth)acrylaten), wenigstens eine Hydroxylgruppe im Molekül tragende ethylenisch ungesättigte Monomere, vorzugsweise wenigstens eine Hydroxylgruppe im Molekül tragende (Meth)acrylate, wenigstens eine Carboxylgruppe im Molekül tragende ethylenisch ungesättigte Monomere, vorzugsweise (Meth)acrylsäure, und Mischungen davon. Besonders bevorzugt sind die ethylenisch ungesättigten Monomere ausgewählt aus der Gruppe bestehend aus Cyclohexylacrylat, Cyclohexylmethacrylat, Alkylacrylate und Alkylmethacrylate mit bis zu 20 Kohlenstoffatomen im Alkylrest, wie z.B. Methyl(meth)acrylat, Ethyl(meth)acrylat, n-Propyl(meth)acrylat, iso-Propyl(meth)acrylat, n-Butyl(meth)acrylat, tert.-Butyl(meth)acrylat, n-Hexyl(meth)acrylat, Ethylhexyl(meth)acrylat, Stearyl(meth)acrylat und Lauryl(meth)acrylat oder Gemische aus diesen Monomeren, Hydroxyalkylester der Acrylsäure und/oder Methacrylsäure wie 2-Hydroxyethyl(meth)acrylat, 2-Hydroxypropyl(meth)acrylat, 3-Hydroxypropyl(meth)acrylat, 3-Hydroxybutyl(meth)acrylat und 4-Hydroxybutyl(meth)acrylat, (Meth)acrylsäure, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, und Allyl(meth)acrylat. Ganz besonders bevorzugte ethylenisch ungesättigte Monomere zur Herstellung des polymeren Harzes (P1) sind ausgewählt aus der Gruppe bestehend aus n-Butyl(meth)acrylat, Methyl(meth)acrylat, 2-Hydroxypropyl(meth)acrylat, 3-Hydroxypropyl(meth)acrylat, (Meth)Acrylsäure und Mischungen davon.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Zur Initiierung der Copolymerisation kann wenigstens ein Initiator wie beispielsweise tert.-Butylperoxy2-ethylhexanoat eingesetzt werden. Vorzugsweise erfolgt die Copolymerisation in einem organischen Lösemittel wie beispielsweise Methylethylketon (MEK) und/oder Methylisobutylketon (MIBK).

*Polymeres Harz P2*

Das polymere Harz (P2) ist ein funktionelle Hydroxyl-Gruppen aufweisender Polyester, welcher eine Säure-Zahl von <25 mg KOH pro g an Polyester aufweist. Es kann gegebenenfalls eine Mischung zweier unterschiedlicher polymerer Harze (P2) eingesetzt werden.

Vorzugsweise wird in Schritt (2) des Verfahrens zur Herstellung der erfindungsgemäßen wässrigen Dispersion ein polymeres Harz (P2) mit einem Festkörpergehalt von 100 Gew.-% eingesetzt, wenn eine Schmelze des polymeren Harzes (P2) eingesetzt wird.

Vorzugsweise weist das polymere Harz (P2) ein gewichtsmittleres Molekulargewicht von 1 000 bis 100 000 g/mol, besonders bevorzugt von 2 000 bis 80 000 g/mol, ganz besonders bevorzugt von 3 000 bis 60 000 g/mol, insbesondere von 4 000 bis 55 000 g/mol oder von 5 000 bis 50 000 g/mol auf. Die Bestimmungsmethode zur Ermittlung des gewichtsmittleren Molekulargewichts ist nachstehend beschrieben.

Vorzugsweise weist das polymere Harz (P2) ein zahlenmittleres Molekulargewicht von 100 bis 50 000 g/mol, besonders bevorzugt von 200 bis 40 000 g/mol, ganz besonders bevorzugt von 300 bis 25 000 g/mol, insbesondere von 500 bis 20 000 g/mol oder von 1 000 bis 10 000 g/mol auf. Die Bestimmungsmethode zur Ermittlung des zahlenmittleren Molekulargewichts ist nachstehend beschrieben.

Das polymere Harz (P2) weist eine Säure-Zahl von <25 mg KOH pro g an (P2), vorzugsweise von <20 mg KOH pro g an (P2), besonders bevorzugt von <18 mg KOH pro g an (P2), auf. Vorzugsweise weist das polymere Harz (P2) eine Säurezahl von 0 bis <25, besonders bevorzugt von 0 bis <2, ganz besonders bevorzugt von 1 bis <25, insbesondere von 1 bis <20 oder von 1 bis <18 mg KOH pro g polymeres Harz (P2) auf. Die Bestimmungsmethode zur Ermittlung der Säure-Zahl ist nachstehend beschrieben.

Das erfindungsgemäß eingesetzte polymere Harz (P2) weist vorzugsweise funktionelle OH-Gruppen auf. Vorzugsweise weist das polymere Harz (P2) eine OH-Zahl (Hydroxyl-Zahl) von 5 bis 100, besonders bevorzugt von 10 bis 90, ganz besonders bevorzugt von 20 bis 80, insbesondere von 30 bis 70 oder von 40 bis 60, mg KOH pro g polymeres Harz (P2) auf. Die Bestimmungsmethode zur Ermittlung der Hydroxyl-Zahl ist nachstehend beschrieben. In einer anderen bevorzugten Ausführungsform weist das polymere Harz (P2) vorzugsweise eine Hydroxyl-Zahl von <75 mg, besonders bevorzugt von <60 mg, ganz besonders bevorzugt von <50 mg KOH pro g an (P2) auf.

Vorzugsweise eignen sich solche Polyester als polymere Harze (P2), die sich von wenigstens einem Polyol wie zum Beispiel wenigstens einem Diol und/oder Triol und wenigstens einer Polycarbonsäure wie zum Beispiel wenigstens einer Dicarbonsäure und/oder entsprechenden Anhydriden davon ableiten. Geeignete Polyole sind zum Beispiel 1,6-Hexandiol, Neopentylglycol, 2,2,4-Trimethyl-1,3-pentandiol, Trimethylolpropan, Hydroxypivalinsäureneopentylglykolester und Mischungen davon. Geeignet Polycarbonsäuren sind zum Beispiel Adipinsäure, Terephthalsäure, Isophthalsäure, ortho-Phthalsäure, Dimethylolpropionsäure und Hexahydrophthalsäureanhydrid und Mischungen davon.

Vorzugsweise weist das polymere Harz (P1) ein gewichtsmittleres Molekulargewicht ($M_w$) in einem Bereich von 15 000 bis 60 000 g/mol und das polymere Harz (P2) ein gewichtsmittleres Molekulargewicht ($M_w$) in einem Bereich von 5 000 bis 40 000 g/mol auf.

**Wässrige Beschichtungszusammensetzung**

Ein weiterer Gegenstand der vorliegenden Erfindung ist eine wässrige Beschichtungszusammensetzung umfassend

(A1) wenigstens die erfindungsgemäße wässrige Dispersion (P) wenigstens zweier polymerer Harze (P1) und (P2),
(A2) wenigstens ein Vernetzungsmittel,
(A3) wenigstens ein Pigment und
(A4) gegebenenfalls wenigstens ein Additiv

zur zumindest teilweisen Beschichtung wenigstens einer mit wenigstens einer Grundierungsschicht beschichteten Metalloberfläche eines Substrats mit einer Decklackschicht, vorzugsweise in einem Coil-Coating-Verfahren.

Die erfindungsgemäße Beschichtungszusammensetzung enthält aufgrund der in ihr enthaltenen Komponenten (A1) und (A2) wenigstens ein Bindemittel (A). Dieses Bindemittel (A) umfasst insbesondere das wenigstens eine Vernetzungsmittel (A2) und die in der als Komponente (A1) eingesetzten wässrigen Dispersion (P) enthaltenen wenigstens zwei polymeren Harze (P1) und (P2). Unter dem Begriff "Bindemittel" werden im Sinne der vorliegenden Erfindung in Einklang mit der DIN EN ISO 4618 (deutsche Fassung, Datum: März 2007) vorzugsweise die vorzugsweise für die Filmbildung verantwortlichen nicht-flüchtigen Anteile einer Beschichtungszusammensetzung wie der erfindungsgemäßen Beschichtungszusammensetzung verstanden. Darin enthaltene Pigmente wie die Komponente (A3) und gegebenenfalls vorhandene Füllstoffe werden somit nicht unter den Begriff des Bindemittels subsumiert. Der nicht-flüchtige Anteil kann gemäß DIN EN ISO 3251 (Datum: Juni 2008) gemäß der nachstehend beschriebenen Methode bestimmt werden. Insbesondere werden unter dem Begriff "Bindemittel" die für die Filmbildung verantwortlichen in der Beschichtungs-zusammensetzung enthaltenen polymeren Harze (P1) und (P2) der Komponente (A1) verstanden. Vom Begriff des "Bindemittels" wird zudem in der Beschichtungszusammensetzung vorhandenes Vernetzungsmittel umfasst, d.h. die Komponente (A2).

Alle im Zusammenhang mit der erfindungsgemäßen wässrigen Dispersion (P) hierin zuvor beschriebene bevorzugte Ausführungsformen sind auch bevorzugte Ausführungsformen hinsichtlich des Einsatzes dieser wässrigen Dispersion (P) einschließlich der darin enthaltenen Komponenten (P1) und (P2) als Komponente (A1) der erfindungsgemäßen wässrigen Beschichtungszusammensetzung.

Vorzugsweise weisen sowohl das polymere Harz (P1) als auch das polymere Harz (P2) reaktive funktionelle Gruppen auf, die eine Vernetzungsreaktion ermöglichen. Jede übliche dem Fachmann bekannte vernetzbare reaktive funktionelle Gruppe kommt dabei als vernetzbare reaktive funktionelle Gruppe in Betracht. Das polymere Harz (P2) weist dabei OH-Gruppen auf. Vorzugsweise weist auch das polymere Harz (P1) OH-Gruppen auf. Die polymeren Harze (P1) und (P2) können dabei selbstvernetzend oder fremd-vernetzend, vorzugsweise fremd-vernetzend sein. Um eine Vernetzungsreaktion zu ermöglichen, enthält die erfindungsgemäße Beschichtungszusammensetzung daher neben den polymeren Harzen (P1) und (P2) zudem wenigstens ein Vernetzungsmittel (A2).

Vorzugsweise enthält die erfindungsgemäße Beschichtungszusammensetzung abgesehen von dem Bindemittel (A) keine weiteren Bindemittel.

Das in der erfindungsgemäß eingesetzten wässrigen Beschichtungszusammensetzung enthaltene Bindemittel (A) ist vorzugsweise thermisch vernetzbar. Vorzugsweise ist das Bindemittel (A) beim Erwärmen auf eine Substrattemperatur oberhalb von Raumtemperatur, d.h. bei einer Substrattemperatur von 18-23°C vernetzbar. Vorzugsweise ist das Bindemittel (A) erst bei Substrattemperaturen $\geq$ 80°C, bevorzugter $\geq$ 110°C, besonders bevorzugt $\geq$ 130°C und ganz besonders bevorzugt $\geq$ 140°C vernetzbar. Besonders vorteilhaft ist das Bindemittel (A) bei einer Substrattemperatur im Bereich von 100 bis 275°C, noch bevorzugter bei 125 bis 275°C, besonders bevorzugt bei 150 bis 275°C vernetzbar, ganz besonders bevorzugt bei 175 bis 275°C, insbesondere bevorzugt bei 200 bis 275°C, am meisten bevorzugt bei 225 bis 275°C vernetzbar.

Vorzugsweise weist die erfindungsgemäße wässrige Beschichtungszusammensetzung einen Festkörpergehalt im Bereich von 30 bis 80 Gew.-%, besonders bevorzugt von 35 bis 77,5 Gew.-%, ganz besonders bevorzugt von 40 bis 75 Gew.-%, insbesondere bevorzugt von 40 bis 70 Gew.-%, jeweils bezogen auf das Gesamtgewicht der Beschichtungszusammensetzung auf.

Die erfindungsgemäße wässrige Beschichtungszusammensetzung weist vorzugsweise einen Festkörpergehalt an den wenigstens zwei polymeren Harzen (P1) und (P2) in einem Bereich von 15 bis 45 Gew.-%, besonders bevorzugt von 20 bis 40 Gew.-%, ganz besonders bevorzugt von 20 bis 35 Gew.-%, insbesondere von 25 bis 35 Gew.-% auf, jeweils bezogen auf das Gesamtgewicht der wässrigen Beschichtungszusammensetzung.

Die erfindungsgemäße Beschichtungszusammensetzung enthält wenigstens ein Vernetzungsmittel als Komponente (A2).

Das Vernetzungsmittel (A2) ist vorzugsweise zur thermischen Vernetzung bzw. Aushärtung geeignet. Solche Vernetzungsmittel sind dem Fachmann bekannt. Zur Beschleunigung der Vernetzung können der wässrigen Beschichtungszusammensetzung geeignete Katalysatoren zugesetzt werden.

Alle dem Fachmann bekannten üblichen Vernetzungsmittel (A2) können zur Herstellung der erfindungsgemäßen wässrigen Beschichtungszusammensetzung eingesetzt werden. Beispiele geeigneter Vernetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, β-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Werden blockierte Polyisocyanate als Vernetzungsmittel gewählt, wird die erfindungsgemäß eingesetzte wässrige Beschichtungszusammensetzung als 1-Komponenten-Zusammensetzung (1-K) formuliert. Werden unblockierte Polyisocyanate als Vernetzungsmittel gewählt, wird die wässrige Beschichtungszusammensetzung als 2-Komponenten-Zusammensetzung (2-K) formuliert.

Ein besonders bevorzugtes Vernetzungsmittel (A2) ist ausgewählt aus der Gruppe bestehend aus blockierten Polyisocyanaten und Melamin-Harzen wie Melamin-Formaldehyd-Kondensationsprodukten, insbesondere veretherte (alkylierte) Melamin-Formaldehyd-Kondensationsprodukte.

Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber reaktiven funktionellen Gruppen wie beispielsweise Hydroxyl-Gruppen bei Raumtemperatur, d.h. bei einer Temperatur von 18 bis 23°C beständig ist, bei erhöhten Temperaturen, beispielsweise bei $\geq$ 80°C, noch bevorzugter $\geq$ 110°C, besonders bevorzugt $\geq$ 130°C und ganz besonders bevorzugt $\geq$ 140°C oder bei 90°C bis 300°C oder bei 100 bis 250°C, noch bevorzugter bei 125 bis 250°C und besonders bevorzugt bei 150 bis 250°C, aber reagiert. Bei der Herstellung der blockierten Polyisocyanate können beliebige für die Vernetzung geeignete organische Polyisocyanate verwendet werden. Als Polyisocyanate wie beispielsweise als Diisocyanate werden bevorzugt (hetero)aliphatische, (hetero)cycloaliphatische, (hetero)aromatische oder (hetero)aliphatisch-(hetero)aromatische Diisocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), , 1,3-Bis(1-isocyanato-1-methylethyl)benzol, Diphenylmethandiisocyanat (MDI), 1,9-Diisocyanato-5-methylnonan, 1,8-Diisocyanato-2,4-dimethyloctan, 1,12-Dodecandiisocyanat, $\omega,\omega$'-Diisocyanatodipropylether, Cyclobuten-1,3-diisocyanat, Cyclohexan-1,3- und -1,4-diisocyanat, 3-Isocyanato-methyl-3,5,5-trimethylcyclohexylisocyanat (Isophorondiisocyanat, IPDI), 1,4-Diisocyanatomethyl-2,3,5,6-tetramethyl-cyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H$_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, $\omega,\omega$'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Naphthylendiisocyanat, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Ganz besonders bevorzugt sind 2,4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI) und/oder 1,6-Hexamethylendiisocyanat (HDI). Insbesondere bevorzugt ist HDI als zur Herstellung des Polyurethan-Harzes eingesetztes Polyisocyanat.

Ebenfalls als geeignete Vernetzungsmittel (A2) einsetzbar sind in Wasser lösbare oder dispergierbare Melamin-Harze, vorzugsweise Melamin-Formaldehyd-Kondensationsprodukte, insbesondere gegebenenfalls veretherte (alkylierte wie beispielsweise C$_1$-C$_6$-alkylierte) Melamin-Formaldehyd-Kondensationsprodukte. Ihre Wasserlöslichkeit bzw. Wasserdispergierbarkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Besonders bevorzugt sind mit wenigstens einem C$_{1-6}$-Alkohol, vorzugsweise mit wenigstens einem C$_{1-4}$-Alkohol, insbesondere mit Methanol veretherte (methylierte) Melaminharze wie Melamin-Formaldehyd-Kondensationsprodukte. Bei Verwendung von Lösungsvermittlern als optionale weitere Additive können auch ethanol-, propanol und/oder butanolveretherte Melaminharze, insbesondere die entsprechenden veretherten Melamin-Formaldehyd-Kondensationsprodukte in wässriger Phase gelöst oder dispergiert werden.

In einer bevorzugten Ausführungsform ist das Vernetzungsmittel (A2) der erfindungsgemäßen Beschichtungszusammensetzung wenigstens ein in Wasser lösbares oder dispergierbares Melamin-Harz, vorzugsweise wenigstens ein in Wasser lösbares oder dispergierbares Melamin-Formaldehyd-Kondensationsprodukt, insbesondere wenigstens ein in Wasser lösbares oder dispergierbares verethertes (alkyliertes), vorzugsweise methyliertes Melamin-Formaldehyd-Kondensationsprodukt.

Die erfindungsgemäße wässrige Beschichtungszusammensetzung enthält vorzugsweise als Vernetzungsmittel (A2) somit wenigstens ein gegebenenfalls alkyliertes Melamin-Formaldehyd-Kondensationsprodukt. Vorzugsweise enthält die erfindungsgemäße wässrige Beschichtungszusammensetzung das Vernetzungsmittel (A2) in einer Menge von 5 bis 35 Gew.-%, vorzugsweise in einer Menge von 10 bis 30 Gew.-%, besonders bevorzugt in einer Menge von 15 bis 25 Gew.-%, bezogen auf das Gesamtgewicht der polymeren Harze (P1) und (P2), bezogen auf den jeweiligen Festkörpergehalt.

Vorzugsweise enthält die wässrige Beschichtungszusammensetzung das Vernetzungsmittel (A2) in einer Menge von 1 bis 20 Gew.-%, vorzugsweise in einer Menge von 2 bis 15 Gew.-%, besonders bevorzugt in einer Menge von 3 bis 10 Gew.-%, bezogen auf das Gesamtgewicht der wässrigen Beschichtungszusammensetzung.

Die erfindungsgemäße Beschichtungszusammensetzung enthält wenigstens ein Pigment als Komponente (A3).

Vorzugsweise ist ein solches Pigment ausgewählt aus der Gruppe bestehend aus organischen und anorganischen, farbgebenden und füllenden Pigmenten. Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Besonders bevorzugt sind Titandioxid und/oder Weißpigmente wie Zinkweiß, Zinksulfid und/oder Lithopone als wenigstens ein Pigment (A3).

Als in der wässrigen Beschichtungszusammensetzung enthaltene Pigmente (A3) können zudem Effektpigmente eingesetzt werden. Ein Fachmann ist mit dem Begriff der Effektpigmente vertraut. Insbesondere handelt es sich bei Effektpigmenten um solche Pigmente sind, die optisch effektgebend oder farb- und optisch effektgebend, insbesondere optisch effektgebend sind. Eine entsprechende Einteilung der Pigmente kann nach DIN 55944 (Datum: Dezember 2011) erfolgen. Vorzugsweise werden die Effektpigmente aus der Gruppe bestehend aus organischen und anorganischen, optisch effektgebenden, farb- und optisch effektgebenden, Pigmenten, ausgewählt. Bevorzugt werden sie aus der Gruppe bestehend aus organischen und anorganischen, optisch effektgebenden oder farb- und optisch effektgebenden Pigmenten, ausgewählt. Insbesondere werden die organischen und anorganischen, optisch effektgebenden und farb- und optisch effektgebenden Pigmente aus der Gruppe bestehend aus gegebenenfalls beschichteten Metalleffektpigmenten, aus gegebenenfalls beschichteten Metalloxideffektpigmenten, aus aus gegebenenfalls beschichteten Metallen und Nichtmetallen zusammengesetzten Effektpigmenten und gegebenenfalls beschichteten nichtmetallischen Effektpigmenten ausgewählt. Insbesondere sind die gegebenenfalls beschichteten wie z.B. silikatbeschichteten Metalleffektpigmente Aluminiumeffektpigmente, Eiseneffektpigmente oder Kupfereffektpigmente. Ganz besonders bevorzugt sind gegebenenfalls beschichtete wie z.B. silikatbeschichtete Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan. Die erfindungsgemäß eingesetzten Effektpigmente, insbesondere gegebenenfalls beschichtete wie z.B. silikatbeschichteten Aluminiumeffektpigmente, können in jeder üblichen dem Fachmann bekannten Form wie z.B. einer Blättchen- und/oder einer Plättchenform, insbesondere einer (Corn)flake- oder einer Silverdollar-Form vorliegen. Insbesondere sind die aus Metallen und Nichtmetallen zusammengesetzten Effektpigmente mit Eisenoxid beschichtete plättchenförmige Aluminiumpigmente, wie sie beispielsweise in der europäischen Patentanmeldung EP 0 562 329 A2 beschrieben werden; Glasblättchen, die mit Metallen, insbesondere Aluminium, beschichtet sind; oder Interferenzpigmente, die eine Reflektorschicht aus Metall, insbesondere Aluminium, enthalten und einen starken Farbflop aufweisen. Insbesondere sind die nichtmetallischen Effektpigmente Perlglanzpigmente, insbesondere Micapigmente; mit Metalloxiden beschichtete, plättchenförmige Graphitpigmente; Interferenzpigmente, die keine Reflektorschicht aus Metall enthalten und einen starken Farbflop aufweisen; plättchenförmige Effektpigmente auf der Basis von Eisenoxid, die einen Farbton von Rosa bis Braunrot aufweisen; oder organische, flüssigkristalline Effektpigmente. Ergänzend wird hinsichtlich der erfindungsgemäß eingesetzten Effektpigmente auf Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Der Pigment-Gehalt an Pigment (A3) in den erfindungsgemäßen wässrigen Beschichtungszusammensetzungen kann variieren. Vorzugsweise liegt der Pigment-Gehalt, bezogen auf die erfindungsgemäß bereitgestellte wässrigen Beschichtungszusammensetzungen im Bereich von 0,1 bis 50 Gew.-%, bevorzugt im Bereich von 1,0 bis 45 Gew.-%, besonders bevorzugt im Bereich von 2,0 bis 40 Gew.-%, ganz besonders bevorzugt im Bereich von 3,0 bis 35 Gew.-% und insbesondere im Bereich von 4,0 bis 35 Gew.-%. Alternativ enthält die erfindungsgemäße wässrige Beschichtungszusammensetzung das wenigstens eine Pigment (A3) vorzugsweise in einer Menge in einem Bereich von 10 bis 60 Gew.-%, besonders bevorzugt von 15 bis 55 Gew.-%, ganz besonders bevorzugt von 20 bis 50 Gew.-%, insbesondere von 25 bis 45 Gew.-%, jeweils bezogen auf das Gesamtgewicht der wässrigen Beschichtungszusammensetzung.

Die erfindungsgemäße Beschichtungszusammensetzung und auch die erfindungsgemäße Dispersion (P) kann je nach erwünschter Anwendung ein oder mehrere üblicherweise eingesetzte Additive als Komponente (A4) enthalten. Vorzugsweise sind diese Additive (A4) ausgewählt aus der Gruppe bestehend aus Antioxidantien, Antistatika, Netz- und Dispergiermitteln, Emulgatoren, Verlaufshilfsmitteln, Löslichkeitsvermittlern, Entschäumungsmitteln, Benetzungsmitteln, Stabilisierungsmitteln, vorzugsweise Hitze- und/oder Wäreme-Stabilisatoren, Prozess-Stabilisatoren und UV- und/oder Licht-Stabilisatoren, Lichtschutzmitteln, Entlüftern, Inhibitoren, Katalysatoren, Wachsen, Netz- und Dispergiermitteln, Flexibilisierungsmitteln, Flammschutzmitteln, Lösemitteln, Reaktivverdünnern, Trägermedien, Harze, Wachse, Hydrophobierungsmitteln, Hydrophilierungsmitteln, Ruß, Metalloxiden und/oder Halbmetalloxiden, Verdickern, Thixotropiermitteln, Schlagzähmachern, Blähmitteln, Prozesshilfsmitteln, Weichmachern, pulver- und faserförmigen Feststoffen, vorzugsweise pulver- und faserförmige Feststoffen ausgewählt aus der Gruppe bestehend aus Füllstoffen, Glasfasern und Verstärkern, und Gemischen aus den vorstehend genannten weiteren Additiven. Der Additiv-Gehalt an Additiv (A4) in der erfindungsgemäßen Beschichtungszusammensetzung kann variieren. Vorzugsweise liegt der Gehalt, bezogen auf das Gesamtgewicht der erfindungsgemäßen Beschichtungszusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%. Vorzugsweise liegt der Gehalt, bezogen auf das Gesamtgewicht der erfindungsgemäßen Dispersion (P) bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

**Verfahren zur Herstellung der wässrigen Beschichtungszusammensetzung**

Die vorliegende Erfindung betrifft weiterhin ein Verfahren zur Herstellung der erfindungsgemäßen Beschichtungszusammensetzung.

Die erfindungsgemäße Beschichtungszusammensetzung kann dadurch hergestellt werden, dass zunächst eine wässrige Dispersion (P) hergestellt wird, die erhältlich ist durch ein Verfahren umfassend wenigstens die Schritte (1), (2), (3) und (4), nämlich

(1) Herstellen einer Dispersion oder Lösung des wenigstens einen polymeren Harzes (P1) in wenigstens einem organischen Lösemittel,
(2) Herstellen einer Mischung aus der nach Schritt (1) erhaltenen Dispersion oder Lösung und einer Schmelze oder Lösung des wenigstens einen polymeren Harzes (P2),
(3) Zugeben von Wasser zu der nach Schritt (2) erhaltenen Mischung und
(4) Entfernen des organischen Lösemittels aus der nach Schritt (3) erhaltenen Mischung unter Erhalt der wässrigen Dispersion (P).

Gegebenenfalls kann zwischen Schritt (2) und Schritt (3) wie vorstehend beschrieben ein Schritt (2a) durchgeführt werden.

Im Anschluss daran wird die so erhaltene Dispersion (P) als Komponente (A1) mit den weiteren erfindungsgemäß zur Herstellung der erfindungsgemäßen Beschichtungszusammensetzung eingesetzten Komponenten (A2) und (A3) sowie gegebenenfalls (A4) und gegebenenfalls Wasser in einem Schritt (5) vermischt, beispielsweise mittels Schnellrührer, Rührkessel, Rührwerksmühlen, Dissolver, Kneter, oder In-Line-Dissolvern.

**Verwendung der wässrigen Beschichtungszusammensetzung**

Ein weiterer Gegenstand der vorliegenden Erfindung ist eine Verwendung der erfindungsgemäßen wässrigen Beschichtungszusammensetzung zur zumindest teilweisen Beschichtung wenigstens einer mit wenigstens einer Grundierungsschicht beschichteten Metalloberfläche eines Substrats mit einer Decklackschicht, vorzugsweise in einem Coil-Coating-Verfahren.

Alle im Zusammenhang mit der erfindungsgemäßen wässrigen Beschichtungszusammensetzung hierin zuvor beschriebene bevorzugte Ausführungsformen sind auch bevorzugte Ausführungsformen hinsichtlich einer Verwendung dieser erfindungsgemäßen wässrigen Beschichtungszusammensetzung zur zumindest teilweisen Beschichtung wenigstens einer mit wenigstens einer Grundierungsschicht beschichteten Metalloberfläche eines Substrats mit einer Decklackschicht, vorzugsweise in einem Coil-Coating-Verfahren.

Als Substrat kann jedes Objekt eingesetzt werden, welches wenigstens eine metallische Oberfläche aufweist, insbesondere ein Metallband.

**Verfahren, insbesondere Coil-Coating-Verfahren**

Ein weiterer Gegenstand der vorliegenden Erfindung ist ein Verfahren zur zumindest teilweisen Beschichtung wenigstens einer mit wenigstens einer Grundierungsschicht beschichteten Metalloberfläche eines Substrats mit einer Decklackschicht, vorzugsweise umfassend wenigstens einen Schritt (d)

(d) zumindest teilweise Beschichtung wenigstens einer mit wenigstens einer Grundierungsschicht beschichteten Metalloberfläche eines Substrats mit der erfindungsgemäßen wässrigen Beschichtungszusammensetzung zum Aufbringen einer Decklackschicht.

Vorzugsweise ist Schritt (d) Teil eines Coil-Coating-Verfahrens.

Ein weiterer Gegenstand der vorliegenden Erfindung ist ein Verfahren, vorzugsweise ein Coil-Coating-Verfahren, zur zumindest teilweisen Beschichtung wenigstens einer Metalloberfläche eines Substrats umfassend die Schritte

(a) gegebenenfalls Reinigung der Metalloberfläche von Verschmutzungen,

(b) gegebenenfalls zumindest einseitiges Aufbringen einer Vorbehandlungsschicht auf die Metalloberfläche,

(c) zumindest einseitiges Aufbringen einer Grundierungsschicht auf die Metalloberfläche oder auf die gegebenenfalls in Schritt (b) aufgetragene Vorbehandlungsschicht und gegebenenfalls Aushärten der so aufgetragenen Grundierungsschicht,

(d) zumindest teilweise Beschichtung der mit der Grundierungsschicht gemäß Schritt (c) beschichteten Metalloberfläche mit der erfindungsgemäßen wässrigen Beschichtungszusammensetzung zum Aufbringen einer Decklackschicht,

(e) Aushärten der gemäß Schritt (d) aufgetragenen Decklackschicht.

Alle im Zusammenhang mit der erfindungsgemäßen wässrigen Beschichtungszusammensetzung hierin zuvor beschriebene bevorzugte Ausführungsformen sind auch bevorzugte Ausführungsformen hinsichtlich einer Verwendung dieser erfindungsgemäßen wässrigen Beschichtungszusammensetzung zur zumindest teilweisen Beschichtung wenigstens einer mit wenigstens einer Grundierungsschicht beschichteten Metalloberfläche eines Substrats mit einer Decklackschicht, vorzugsweise in einem Coil-Coating-Verfahren oder zur zumindest teilweisen Beschichtung wenigstens einer Metalloberfläche eines Substrats, insbesondere innerhalb des Schrittes (d) jedes dieser Verfahren.

Der Schritt (d) des erfindungsgemäßen Verfahrens erfolgt dabei zwischen Schritt (c) und (e).

Die optionalen Schritte (a) und/oder (b) sowie der Schritt (c) werden vor Schritt (d) durchgeführt. Der Schritt (e) wird nach Schritt (d) durchgeführt.

Die Reinigung im optionalen Schritt (a) des erfindungsgemäßen Verfahrens umfasst vorzugsweise eine Entfettung der Metalloberfläche des Substrats wie zum Beispiel des Metallbandes. Dabei können Verschmutzungen entfernt werden, die sich während der Lagerung angelagert haben oder temporäre Korrosionsschutzöle mit Hilfe von Reinigungsbädern entfernt werden.

Vorzugsweise wird die Vorbehandlungsschicht im optionalen Schritt (b) des erfindungsgemäßen Verfahrens in einer Trockenschichtdicke in einem Bereich von 1 bis 10 $\mu$m, besonders bevorzugt in einem Bereich von 1 bis 5 $\mu$m, aufgebracht. Alternativ kann die Vorbehandlungsschicht auch eine Trockenschichtdicke < 1 $\mu$m aufweisen, z.B. im Bereich von < 1 $\mu$m bis 5 $\mu$m. Vorzugsweise erfolgt die Auftragung der Vorbehandlungsschicht im Tauch- oder Spritzverfahren oder im Rollenauftrag. Diese Schicht soll die Korrosionsbeständigkeit steigern und kann zudem der Verbesserung der Haftung nachfolgender Lackschichten an der Metalloberfläche dienen. Es sind beispielsweise Cr(VI)-haltige, Cr(III)-haltige sowie auch chromatfreie wie zum Beispiel phosphathaltige Vorbehandlungsbäder bekannt.

Alternativ kann Schritt (b) auch mit einer wässrigen Vorbehandlungs-Zusammensetzung erfolgen, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist. Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die $2{,}5 \cdot 10^{-4}$ mol/L nicht unterschreitet, aber nicht grösser als $2{,}0 \cdot 10^{-2}$ mol/L ist. Die Herstellung solcher Vorbehandlungs-Zusammensetzungen und ihr Einsatz in der Vorbehandlung ist beispielsweise aus WO 2009/115504 A1 bekannt. Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise ein wenigstens Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen und ihr Einsatz in der Vorbehandlung ist ebenfalls aus WO 2009/115504 A1 bekannt. Die Alumosilikate liegen vorzugsweise als Nanopartikel mit einer durch dynamische Lichtstreuung bestimmbaren mittleren Teilchengröße im Bereich von 1 bis 100 nm. Die durch dynamische Lichtstreuung bestimmbare mittlere Teilchengröße solcher Nanopartikel im Bereich von 1 bis 100 nm wird dabei gemäß DIN ISO 13321 (Datum: 1.10.2004) bestimmt. Vorzugsweise weist die Metalloberfläche nach Schritt (b) eine Vorbehandlungsschicht auf. Alternativ kann Schritt (b) auch mit einer wässrigen Sol-Gel-Zusammensetzung erfolgen.

Vorzugsweise wird die Grundierungsschicht, d.h. eine Primerschicht, im Schritt (c) des erfindungsgemäßen Verfahrens in einer Trockenschichtdicke in einem Bereich von 5 bis 45 $\mu$m, besonders bevorzugt in einem Bereich von 2 bis 35 $\mu$m, insbesondere in einem Bereich von 2 bis 25 $\mu$m aufgebracht. Üblicherweise erfolgt das Auftragen dieser Schicht im Rollenauftragsverfahren. Solche Primerschichten sind zum Beispiel aus WO 2006/079628 A1 bekannt.

Vorzugsweise wird die Decklackschicht in Schritt (d) des erfindungsgemäßen Verfahrens mit einer Trockenschichtdicke bis zu 30 $\mu$m, insbesondere bis zu 25 $\mu$m, wie beispielsweise einer Trockenschichtdicke im Bereich von 10 bis 27 $\mu$m oder 10 bis 25 $\mu$m auf eine zumindest teilweise auf eine mit der Grundierungsschicht gemäß Schritt (c) beschichtete Metalloberfläche eines Substrats mittels der erfindungsgemäßen wässrigen Beschichtungszusammensetzung aufgebracht. Vorzugsweise wird die erfindungsgemäße Beschichtungszusammensetzung als Decklackschicht in einer Trockenschichtdicke im Bereich von 10 bis 25 $\mu$m oder von 10 bis < 28 $\mu$m oder von 10 bis < 27 $\mu$m, insbesondere von 10 bis 25 $\mu$m aufgebracht. Besonders bevorzugt wird die erfindungsgemäße Beschichtungszusammensetzung als Decklackschicht in einer Trockenschichtdicke im Bereich von 10 bis 25 $\mu$m oder von 10 bis 20 $\mu$m, ganz besonders bevorzugt im Bereich von 12 bis 25 $\mu$m, insbesondere im Bereich von 15 bis 25 $\mu$m, aufgebracht. Die Bestimmung der Trockenschichtdicke erfolgt nach der nachstehend beschriebenen Methode. Üblicherweise erfolgt das Auftragen dieser Schicht im Rollenauftragsverfahren.

Die Aushärtung im Schritt (e) erfolgt vorzugsweise bei Temperaturen oberhalb der Raumtemperatur, d.h. oberhalb von 18-23°C, besonders bevorzugt bei Temperaturen $\geq$ 80°C, noch bevorzugter $\geq$ 110°C, ganz besonders bevorzugt $\geq$ 140°C und insbesondere bevorzugt $\geq$ 170°C. Besonders vorteilhaft ist das Aushärten bei 100 bis 250°C, noch bevorzugter bei 150 bis 250°C und besonders bevorzugt bei 200 bis 250°C. Die Aushärtung erfolgt vorzugsweise über eine Dauer von 30 s bis 60 s.

Vorzugsweise ist das erfindungsgemäße Verfahren ein kontinuierliches Verfahren.

Vorzugsweise ist das erfindungsgemäße Verfahren ein Coil-Coating-Verfahren, das dem Fachmann bekannt ist, z.B. aus WO 2006/079628 A1.

Als Substrat kann jedes Objekt eingesetzt werden, welches wenigstens eine metallische Oberfläche aufweist, insbesondere ein Metallband.

Unter dem Begriff "Metallband" sind im Sinne der vorliegenden Erfindung vorzugsweise nicht nur vollständig aus wenigstens einem Metall bestehende Bänder zu verstehen, sondern auch Bänder, die nur mit wenigstens einem Metall beschichtet sind, d.h. wenigstens eine metallische Oberfläche aufweisen, und selbst aus andersartigen Materialien bestehen, beispielsweise aus Polymeren oder Verbundwerkstoffen. "Bänder" im Sinne der vorliegenden Erfindung sind vorzugsweise flächenförmige Formkörper mit wenigstens einer metallischen Oberfläche, besonders bevorzugt ausgewählt aus der Gruppe bestehend aus Blechen, Folien und Platten. Der Begriff "Metall" umfasst vorzugsweise auch Legierungen. In einer bevorzugten Ausführungsform ist ein "Metallband" im Sinne der vorliegenden Erfindung vollständig aus Metallen und/oder Legierungen bestehend. Bevorzugt handelt es sich um unedle Metalle oder Legierungen, welche üblicherweise als metallische Konstruktionswerkstoffe eingesetzt werden und die vor Korrosion geschützt werden müssen.

Alle dem Fachmann bekannten üblichen Metallbänder können mittels des erfindungsgemäßen Verfahrens beschichtet werden. Vorzugsweise sind die zur Herstellung der erfindungsgemäßen Metallbänder verwendeten Metalle ausgewählt aus der Gruppe bestehend aus Eisen, Stahl, Zink, Zinklegierungen, Aluminium und Aluminiumlegierungen. Das Metall kann gegebenenfalls verzinkt sein wie z.B. verzinktes Eisen oder verzinkter Stahl wie elektrolytisch verzinkter oder heißverzinkter Stahl. Zink- oder Aluminiumlegierungen sowie deren Verwendung zum Beschichten von Stahl sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von AluminiumLegierungen umfassen insbesondere Mg, Mn, Si, Zn, Cr, Zr, Cu oder Ti. Der Begriff "Zinklegierung" soll auch Al/Zn-Legierungen einschließen, bei denen Al und Zn in annähernd gleicher Menge vorhanden sind, sowie Zn/Mg-Legierungen, in denen Mg in einer Menge von 0,1 bis 10 Gew.-%, bezogen auf das Gesamtgewicht der Legierung, vorhanden ist. Mit derartigen Legierungen beschichteter Stahl ist kommerziell erhältlich. Der Stahl selbst kann die üblichen, dem Fachmann bekannten Legierungskomponenten enthalten.

Im erfindungsgemäßen Coil-Coating-Verfahren werden vorzugsweise 0,2 bis 2 mm dicke und bis zu 2 m breite Metallbänder mit einer Geschwindigkeit von bis zu 200 m/min durch eine Coil-Coating-Anlage transportiert und dabei beschichtet.

Typische Vorrichtungen, in denen das erfindungsgemäße Verfahren durchgeführt werden kann, umfassen eine Aufgabestation, einen Bandspeicher, eine Reinigungs- und Vorbehandlungszone, in der die optionale Reinigung erfolgen und optionale Vorbehandlungsschicht aufgebracht werden kann, eine erste Lackierstation zum Aufbringen der Grundierungsschicht nebst Trocknungsofen und folgender Kühlzone, eine zweite Lackierstation zum Aufbringen der Decklackschicht mit Trocknungsofen, Kaschierstation und Kühlung sowie einen Bandspeicher und einen Aufwickler (2-Schicht-Anlage). Im Fall einer 1-Schicht-Anlage erfolgen dagegen eine optionale Reinigung sowie die Auftragung einer Vorbehandlungs-Grundierungsschicht in einer kombinierten Reinigungs-, Vorbehandlungs-, und Lackierzone nebst Trocknungsofen und nachfolgender Kühlzone. Daran schließt sich eine Lackierstation zum Aufbringen einer Decklackschicht mit Trocknungsofen, Kaschierstation und Kühlung sowie ein Bandspeicher und ein Aufwickler an.

**Decklackschicht**

Ein weiterer Gegenstand der vorliegenden Erfindung ist eine Decklackschicht, welche erhältlich ist durch zur zumindest teilweise Beschichtung wenigstens einer mit wenigstens einer Grundierungsschicht beschichteten Metalloberfläche eines Substrats mit der erfindungsgemäßen wässrigen Beschichtungszusammensetzung und/ oder welche erhältlich ist durch das erfindungsgemäße Verfahren, insbesondere nach Durchführung von Schritt (d) und gegebenenfalls nach einer Aushärtung gemäß Schritt (e).
Die Decklackschicht wird dabei auf wenigstens eine mit wenigstens einer Grundierungsschicht beschichtete Metalloberfläche eines Substrats aufgebracht. Vorzugsweise ist das Verfahren dabei ein Coil-Coating-Verfahren, d.h. ein Verfahren zur Bandbeschichtung.

**Zumindest teilweise beschichtetes Substrat**

Ein weiterer Gegenstand der vorliegenden Erfindung ist ein zumindest teilweise beschichtetes Substrat erhältlich nach dem erfindungsgemäßen Verfahren wie beispielsweise ein entsprechendes zumindest teilweise beschichtetes Metallband.
Ein weiterer Gegenstand der vorliegenden Erfindung ist ein aus wenigstens einem solchen beschichteten Substrat wie einem beschichteten Metallband hergestelltes Bauteil, vorzugsweise metallisches Bauteil. Solche Bauteile können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

**Bestimmungsmethoden**

*1. Bestimmung der Hydroxyl-Zahl*

Die Bestimmungsmethode zur Ermittlung der Hydroxyl-Zahl ist angelehnt an DIN 53240-2 (Datum: November 2007). Die Hydroxyl-Zahl-Bestimmung dient zur Ermittlung des Gehaltes an Hydroxyl-Gruppen einer Verbindung. Dabei wird eine Probe einer Verbindung, von der die Hydroxyl-Zahl zu ermitteln ist, mit Essigsäureanhydrid in Gegenwart von 4-Dimethylaminopyridin (DMAP) als Katalysator umgesetzt, wobei die Hydroxyl-Gruppen der Verbindung acetyliert werden. Pro Hydroxyl-Gruppe entsteht dabei ein Molekül Essigsäure. Die anschließende Hydrolyse des überschüssigen Essigsäureanhydrids liefert zwei Moleküle Essigsäure. Der Verbrauch an Essigsäure wird titrimetrisch aus der Differenz des ermittelten Hauptwertes und eines parallel durchzuführenden Blindwertes ermittelt.
Eine Probe wird in einem 150 mL Becherglas mittels einer Analysenwaage auf 0,1 mg genau eingewogen und das Probengefäß anschließend mit einem Rührfisch versehen in einen Probenwechsler eines Titrierautomaten mit Probenwechsler und Dosierstationen für die einzelnen Reagenzien und Lösemittel gestellt (Metrohm Titrando 835 mit integriertem Karl-Fischer-Titrierstand der Firma Metrohm). Nach erfolgter Einwaage wird die Bearbeitungssequenz am Tritierautomaten gestartet. Folgende Abläufe werden vollautomatisch in der nachstehenden Reihenfolge durchgeführt:

-   Zugabe von 25 mL THF und 25 mL Katalysatorreagenz in alle Probengefäße.
-   Rühren der Proben für 5 - 15 Minuten, je nach Löslichkeit.
-   Zugabe von 10 mL Acetylierungsreagenz in alle Probengefäße
-   13 Minuten warten, Rühren für 15 Sekunden, weitere 13 Minuten warten
-   Zugabe von 20 mL Hydrolysierungsreagenz (N,N-Dimethylformamid (DMF) und vollentsalztes Wasser (VE-Wasser) im Verhältnis 4:1 Volumen-%) in alle Probengefäße
-   7 Minuten warten, 15 Sekunden rühren (insgesamt 3 mal)
-   Titration mit 0,5 mol/l methanolischer KOH

Die Endpunkterkennung erfolgt potentiometrisch. Als Elektrodensystem wird dabei ein Elektrodensystem bestehend aus einer Platin-Titrode und Referenzelektrode (Silber-Silberchlorid mit Lithiumchlorid in Ethanol) eingesetzt.

Das Acetylierungs-Reagenz wird hergestellt, indem in einen 1 000 mL Messkolben 500 mL DMF vorgelegt werden, zu diesen 117 mL Essigsäureanhydrid gegeben werden und mit DMF bis zur Marke von 1 000 ml aufgefüllt wird.

Das Katalysator-Reagenz wird hergestellt, indem 25 g 4-Dimethylaminopyridin (DMAP) in 2,5 L DMF gelöst werden.

Die Hydroxyl-Zahl (OH-Zahl) in mg KOH/g wird nach folgender Formel berechnet:

$$OH - Zahl = \frac{(V_2 - V_1) \cdot c \cdot 56,1}{m} + SZ$$

$V1$ = Verbrauch *KOH* im Hauptversuch in mL (Hauptwert)
$V2$ = Verbrauch *KOH* im Blindversuch in mL (Blindwert)
c = die Konzentration der Kaliumhydroxid-Lösung, in mol/L
*m* = Einwaage in g
*SZ* = Säurezahl in mg KOH/g der Probe

*2. Bestimmung des zahlenmittleren und des gewichtsmittleren Molekulargewichts*

Die Bestimmung des zahlenmittleren Molekulargewichts ($M_n$) erfolgt mittels Gel-Permeations-Chromatographie (GPC). Die Bestimmungsmethode ist dabei angelehnt an DIN 55672-1 (Datum: August 2007). Neben dem zahlenmittleren Molekulargewicht können mit dieser Methode zudem das gewichtsmittlere Molekulargewicht ($M_w$) sowie die Polydispersität (Verhältnis von gewichtsmittlerem Molekulargewicht ($M_w$) zu zahlenmittlerem Molekulargewicht ($M_n$)) bestimmt werden.

Es werden 5 mg einer Probe (bezogen auf den Festkörper-Anteil) mittels einer Analysenwaage in 1,5 mL mobiler Phase gelöst. Als mobile Phase wird Tetrahydrofuran eingesetzt, welches 1 mol/L Essigsäure enthält. Zu der Lösung der Probe werden zudem 2 $\mu$l Ethylbenzol/mL Lösung hinzugesetzt. Sämtliche gegebenenfalls vorhandene unlösliche Anteile wie beispielsweise Pigmente werden abzentrifugiert oder abfiltriert.

Die Bestimmung des zahlenmittleren Molekulargewichts ($M_n$) erfolgt gegen Polymethylmethacrylat-Standards mit unterschiedlichen Molekulargewichten (PMMA-Standards). Dabei wird vor Beginn einer jeden Bestimmung eine Kalibration durchgeführt. Dazu werden die PMMA-Standards (jeweils mit einer Konzentration von 0,1 mg/mL in mobiler Phase (welche zudem 2 $\mu$l Ethylbenzol/mL enthält) eingespritzt. Die Kalibrationskurve (Polynom 5. Ordnung) wird aus den PMMA-Standards mit unterschiedlichen Molekulargewichten erstellt, indem die jeweilige Retentionszeit der einzelnen PMMA-Standards für die Analysenserie ermittelt wird.

Als Gerät wird ein Komplettsystem mit GPC-Säule, Agilent 1100 Pumpe, Autosampler und RI-Detektor eingesetzt. Als Säule wird der Säulensatz PSS 10e3/10e5/10e6 (300 mm x 8 mm; Korngröße 5 $\mu$m) eingesetzt.

Folgende Einstellungen werden dabei verwendet:

| | |
|---|---|
| Injektionsvolumen | : 100 $\mu$l |
| Temperatur | : 35 °C |
| Flussrate | : 1,0 ml/min |
| Laufzeit | : 40 min |

Die Auswertung erfolgt mittels PSS-Auswertesoftware. Die Konzentration der aus den Trennsäulen nach fallender Knäuelgröße eluierten Moleküle wird mit einem konzentrationsempfindlichen Detektor, insbesondere einem Differentialrefraktometer, gemessen. Aus dem resultierenden Probenchromatogramm werden dann mit der zuvor für das System bestimmten Kalibrationskurve die relative Molmassenverteilung, das zahlenmittlere Molekulargewicht ($M_n$), das gewichtsmittlere Molekulargewicht ($M_w$) sowie der Polydispersitätsfaktor $M_w/M_n$ berechnet. Die Auswertegrenzen werden für jede Probe einzeln festgelegt. Die berechneten Werte für $M_n$ und $M_w$ stellen "äquivalente PMMA-Molekulargewichte" dar. Die absoluten Molekulargewichte der Polymere können von diesen Werten abweichen.

*3. MEK-Test angelehnt an DIN EN 13523-11 (Datum: September 2011)*

Der MEK-Test dient zur Ermittlung der Beständigkeit von Lackfilmen gegen organische Lösemittel (Reib-Test).

Ein Stück Mullkompresse (Art. Nr. 1225221 von der Römer Apotheke Rheinberg) wird mit einem Gummiband auf dem Kopf eines MEK-Hammers befestigt und dann mit MEK (Methylethylketon) als Lösemittel getränkt. Der Hammer wiegt 1200 g und hat einen Griff mit einer Auflagefläche von 2,5 cm². In den Hammer wird ebenfalls Lösemittel gefüllt, welches konstant in die Mullkompresse nachläuft. Dies garantiert, dass die Kompresse während des ganzen Tests tropfnass ist. Es wird mit der Kompresse auf einem Prüfblech wie einem der in den Beispielen eingesetzten Prüfblechen **TB1** und **TV1** einmal hinauf und herab gerieben (= 1 DH, eine Doppelreibung). Die Prüfstrecke beträgt dabei 9,5 cm. Hierbei ist 1 DH in 1 s durchzuführen. Dabei wird auf den Hammer keine zusätzliche Kraft ausgeübt. Der obere und untere Umkehrpunkt an den Prüfblechkanten wird nicht bewertet. Es werden die DH gezählt, die erforderlich sind, den gesamten Lackfilm auf dem Prüfblech bis zum Untergrund abzutragen und dieser Wert angegeben. Falls diese Abtragung nicht bis zum Erreichen von maximal 300 DH erreicht wird, wird nach maximal 300 DH abgebrochen.

*4. Bestimmung der Korrosionsbeständigkeit*

Die Bestimmung der Korrosionsbeständigkeit von Beschichtungen erfolgt durch Ermittlung der Kanten- ("edge")- und Ritz- ("scratch") Korrosion bei neutralem Salzsprühtest (angelehnt an DIN EN 13523-8 (Datum: Juli 2010)).
Die Rückseite und die Ober- und Unterkante eines mit einer Lackschicht beschichteten Prüfblechs wie beispielsweise einem der in den Beispielen eingesetzten Prüfbleche **TB1** oder **TV1** wird mit TESA-Film (Nr. 4204) abgeklebt und so vor Korrosion geschützt. Die Längskanten des Prüfblechs werden frisch einmal von oben nach unten (rechte Kante) und einmal von unten nach oben (linke Kante) geschnitten. Abweichend von der DIN EN 13523-8 wird keine Verformung des Blechs vorgenommen. Mittig auf dem Blech wird mit einem Ritzstichel (van Laar) eine ca. 11 cm lange Verletzung der Lackschicht erzeugt, die mindestens 2 cm Abstand zu den Kanten haben muss. Anschließend wird ein neutraler Salzsprühtest mit einem Korrosionsprüfgerät SL 2000 der Firma Liebisch durchgeführt. Dabei dient eine kontinuierlich auf das Blech versprühte, wässrige NaCl-Lösung mit einer Massenkonzentration von 50-60 g/L als angreifendes Mittel. Die Prüftemperatur beträgt 35°C (+ 2°C). Nach 360 Stunden oder nach 1008 Stunden, in denen das zu untersuchende Blech jeweils in der Prüfkammer verbleibt, wird das jeweilige Blech mit Wasser abgespült und nach einer Lagerung von 2-5 Stunden mit einem Messer gekratzt. Nun ermittelt man das Ausmaß der entstandenen Unterwanderung/Korrosion durch Ausmessen. Hierfür legt man eine selbst hergestellte Schablone an den Kanten an und misst je 10 gekennzeichnete Stellen aus. Anschließend verschiebt man die Schablone um 0,5 cm und vermisst erneut 10 Punkte. Anschließend bildet man den Mittelwert. Nun vermisst man nach derselben Methode den Ritz, wobei hier darauf geachtet werden muss, dass die Schablone so angelegt wird, dass die 0-Linie (die Linie auf der Schablone, die den Wert Null mm markiert) auf dem Ritz liegt und man nun jeweils rechts und links vom Ritz die 10 Stellen ausmisst. Auch hier wiederholt man die Messung um 0,5 cm verschoben. Um den Mittelwert zu erhalten, teilt man nun die Summe der ausgemessenen Werte durch 40. Die ausgemessene Fläche dient als Vergleichsmaßstab für die Unterwanderung des Lackfilms durch die Korrosion.

*5. Bestimmung der Biegefähigkeit/Rissbildung (T-Bend) und der Haftung (Tape) von Lacken nach DIN EN 13523-7 (Datum: Oktober 2012)*

Das Prüfverfahren dient zur Ermittlung der Biegefähigkeit bzw. Rissbildung (T-Bend) und der Haftung (Tape) von mit Lacken beschichteten Substraten unter einer Biegebeanspruchung bei 20°C.
Die zu untersuchenden beschichteten Prüfbleche wie beispielsweise die in den Beispielen eingesetzten Prüfbleche **TB1** oder **TV1** werden in 3 - 5 cm breite Streifen geschnitten und mit der beschichteten Seite nach außen um 135° vorgebogen, so dass die Biegeschulter in Walzrichtung (d.h. gegen Aufziehrichtung) liegt. Nach Umkanten auf 135° wird eine vorgegebene Anzahl an Prüfblechen jeweils mit der gleichen Prüfblechdicke vor dem Zusammenpressen der Prüftafel mit dem Schraubstock zwischengelegt. Die Stärke der Umformung wird durch den T-Wert angegeben. Dabei bedeutet:

0 T: kein Blech als Zwischenlage
0,5 T: 1 Blech als Zwischenlage
1,0 T: 2 Bleche als Zwischenlage
1,5 T: 3 Bleche als Zwischenlage
2,0 T: 4 Bleche als Zwischenlage
2,5 T: 5 Bleche als Zwischenlage
3,0 T: 6 Bleche als Zwischenlage

Der Biegeradius wird solange verändert, bis man die kleinste Biegung gefunden hat, bei der mit einer Lupe mit 10-facher Vergrößerung auf der Biegeschulter keine Risse im Lack mehr zu sehen sind. Dieser Wert wird dann als T-Bend notiert.
Über diese Biegeschulter wird nun ein Streifen TESA - Film (Nr. 4104) fest mit dem Finger oder einem Stift aufgerieben und ruckartig abgezogen. Dieser Streifen wird auf ein Blatt Papier (bei hellen Lacksystemen schwarz, bei dunklen Lacksystemen weiß) geklebt und unter einer 100 W Lampe mit der Lupe auf Lackreste untersucht. Der Biegeradius wird solange verändert, bis man die kleinste Biegung gefunden hat, bei der mit der Lupe mit 10-facher Vergrößerung auf dem TESA-Abriss keine Lackreste mehr zu sehen sind. Dieser Wert wird dann als Tape notiert.

*6. Bestimmung der Trockenschichtdicke nach DIN EN ISO 2808 (Verfahren 6B) (Datum: Mai 2007)*

Eine Lackoberfläche eines mit wenigstens diesem Lack beschichteten Substrats wie beispielsweise eines der Prüfbleche **TB1** oder **TV1** wird zuerst mit einem dunklen oder schwarzen Edding markiert und dann an dieser markierten Stelle mit einer Schneide V-förmig (Vorgabe des Ritzstichels) bis auf den Untergrund schräg angeritzt. Mit der im PIG Schichtdickenmessgerät der Firma Byk Gardner mit Schneide 3419 (1 Teilstrich = 1 $\mu$m) eingebauten Skala (Mikroskop) kann die Schichtdicke der einzelnen Lackschicht abgelesen werden. Der Ablesefehler liegt bei $\pm$ 10% bei einer Schichtdicke > 2 $\mu$m.

*7. Bestimmung der Kocherbildung*

Das Prüfverfahren dient zur Bestimmung der Kocherbildung und Beurteilung von Verlaufsstörungen von mit wenigstens einem Lack beschichteten Substraten wie beispielsweise einem der Prüfbleche **TB1** oder **TV1.** Dabei wird die Trockenschichtdicke bestimmt, ab der eine Kocherbildung auf der Lackoberfläche ersichtlich ist. Die Bestimmung der Trockenschichtdicke erfolgt nach der vorstehend unter *Punkt 9.* beschriebenen Methode. Ein Substrat wie ein verzinktes Stahlblech OE HDG 5 wird mit einer zu prüfenden Lackzusammensetzung beschichtet und unter den gewünschten Einbrennbedingungen eingebrannt. Nach Bestimmung der Trockenschichtdicke gemäß der unter *Punkt 6.* beschriebenen Methode werden die zu untersuchenden beschichteten Substrate wie beispielsweise eines der Prüfbleche **TB1** oder **TV1** visuell dahingehend untersucht, ab welcher Schichtdicke die jeweilige Lackoberfläche Kocher aufweist. Diese Trockenschichtdicke wird als Kochergrenze angegeben.

*8. Bestimmung der Säure-Zahl*

Die Bestimmung der Säure-Zahl erfolgt gemäß DIN EN ISO 2114 (Datum: Juni 2002), wobei "Verfahren A" eingesetzt wird. Die angegebene Säure-Zahl entspricht dabei der in der DIN Norm angegebenen Gesamtsäurezahl.

*9. Bestimmung des nicht-flüchtigen Anteils*

Der nicht-flüchtige Anteil, d.h. der Festkörpergehalt (Festkörperanteil), beispielsweise der wässrigen Dispersion (P) oder der Beschichtungszusammensetzung wird gemäß DIN EN ISO 3251 (Datum: Juni 2008) bestimmt. Die Prüfdauer beträgt dabei 60 Minuten bei einer Temperatur von 130°C.

*10. Glanzmessung bei 60° Winkel nach DIN EN 13523-2 (Datum: Oktober 2012)*

Die Glanzmessung bei 60° dient zur Ermittlung des Oberflächenglanzes von lackierten Flächen. Die Bestimmung erfolgt mit einem Glanzgradmessgerät MICRO TRI-GLOSS der Firma BYK. Vor jeder Messung wird das Gerät mit den eingebauten Kalibrierstandards kalibriert. Für die Prüfung wird die Winkeleinstellung von 60° am Gerät ausgewählt. Es werden 5 Messungen in Längsrichtung (Aufziehrichtung bzw. Applikationsrichtung) durchgeführt, in dem das Gerät planar auf die Oberfläche gelegt und der Messwert abgelesen wird. Aus 5 Messwerten wird ein Mittelwert errechnet und im Prüfprotokoll vermerkt. Die Beurteilung erfolgt durch Bestimmung des Glanzwerts (GU) zwischen 0 und 100.

*11. Durchführung des UVCON Test nach DIN EN ISO 4892-3 (Datum: März 2011)*

Das Prüfverfahren ist eine Kurzbewitterungsmethode zur Prüfung der Licht und Wetterechtheit von Beschichtungsstoffen, bei der 8 Fluoreszenzlampen (UVA 340) die Sonnenstrahlung der Außenbewitterung simulieren. Ein Hell-/Dunkelzyklus sowie eine Trocken-/Nassphase simulieren die Wetterbedingungen.

Die Probenkörper werden in Zyklen von jeweils 4 h trockener UV-Bestrahlung bei einer Schwarztafel-Temperatur von (60 $\pm$ 3) °C, gefolgt von 4 h Kondensation von Wasser, ohne Bestrahlen, bei einer Schwarztafel-Temperatur von (40 $\pm$ 3) °C, beansprucht (Ein Zyklus umfasst 8 h Beanspruchung.)

Bei allen zu prüfenden Tafeln wird vor Beginn und nach festgelegten Zyklen der Glanz bei 60°, wie unter *Punkt 10.* beschrieben, bestimmt. Hierdurch kann der prozentuale Glanzabfall nach festgelegten Zyklen bestimmt werden. Beispielsweise kann der UVCON-Test über eine Gesamtdauer von 1008 h durchgeführt werden. Als Zielsetzung gibt es UV Klassen, in denen der maximal erlaubte Glanzabfall und Farbtondifferenz nach festgesetzter Zeit definiert ist. Abweichend von der DIN wird nach der Belastung nicht erneut der Farbton bestimmt.

Die nachfolgenden Beispiele und Vergleichsbeispiele dienen der Erläuterung der Erfindung, sind jedoch nicht einschränkend auszulegen.

**1.** Herstellung einer erfindungsgemäßen wässrigen Dispersion enthaltend die polymeren Harze (P1) und (P2)

**1.1** *Herstellung einer lösemittel-haltigen Dispersion eines polymeren Harzes (P1)*

In einem 5-L-Reaktionsgefäß mit Rührer, Rückflusskühler und 2 Zulaufgefäßen werden zu einer Mischung aus 353,5 g eines Polyesters mit einem zahlenmittleren Molekulargewicht ($M_n$) von 630 g/mol auf Basis von Adipinsäure, Maleinsäureanhydrid, 1,6-Hexandiol und Ethylbutylpropandiol-1,3 (Molverhältnis 0,9 : 0,1 : 0,5 : 1), 39,4 g Neopentylglykol, 18,0 g Trimethylolpropanmonoallylether, 0,45 g Dibutylzinndilaurat und 330 g Methylisobutylketon (MIBK) 289,5 g Isophorondiisocyanat gegeben. Das Reaktionsgemisch wird anschließend unter Stickstoffatmosphäre auf eine Temperatur von 105°C erhitzt. Bei einem NCO-Gehalt von 2,2 Gew.-% werden 69,6 g Trimethylolpropan (TMP) zu dem Reaktionsgemisch gegeben. Bei einem Rest-NCO-Gehalt von <0,05 Gew.-% werden 150,2 g Methylisobutylketon (MIBK) hinzugefügt. Bei einer Temperatur von 105°C wird anschließend ein Gemisch aus 417,4 g n-Butylacrylat, 217,4 g Methylmethacrylat, 75,9 g 3-Hydroxypropylmethacrylat und 1059,4 g Acrylsäure innerhalb von 3 Stunden zu dem Reaktionsgemisch gegeben. Gleichzeitig werden 179,9 g einer 11,7 prozentigen Lösung von tertiär-Butylperethylhexanoat in Methylisobutylketon innerhalb von 3,5 Stunden zudosiert. Es wird so eine lösemittelhaltige Dispersion eines Polyurethan-(Meth)acryl-Copolymeren als polymeres Harz (P1) erhalten, welche einen Festkörpergehalt von 69 Gew.-%, bezogen auf das Gesamtgewicht der Dispersion, aufweist. Das polymere Harz (P1) weist eine Säure-Zahl von $31 \pm 1$ mg KOH pro g (P1) auf.

**1.2** *Herstellung eines polymeren Harzes (P2)*

Als polymeres Harz (P2) wird ein Polyester eingesetzt. Dieser Polyester wird hergestellt durch Zusammengeben der nachfolgend genannten Komponenten unter Rühren mittels eines Dissolvers in der angegebenen Reihenfolge: Hydroxypivalinsäureneopentylglykolester (HPN) (9,86 g), Neopentylglykol (14,80 g), Trimethylolpropan (5,12 g), 2,2,4-Trimethyl-1,3-pentandiol (TMPD) (17,17 g), Adipinsäure (13,92 g), Isoterephthalsäure (28,48 g) und Hexahydrophthalsäureanhydrid (10,66 g). Die eingesetzten Komponenten werden dabei in einen Reaktor gegeben, die resultierende Mischung auf 230-250°C erhitzt und dabei unter Rühren aufgeschmolzen. Gegebenenfalls wird entstandenes Reaktionswasser abdestilliert. Es wird ein Polyester als polymeres Harz (P2) mit einem Festkörpergehalt von 100 Gew.-% erhalten. Das polymere Harz (P2) weist eine OH-Zahl in einem Bereich von 33 bis 43 mg KOH pro g (P2) und eine Säure-Zahl in einem Bereich von 13 bis 16 mg KOH pro g (P2) auf. Der Polyester weist zudem ein zahlenmittleres Molekulargewicht (Mn) im Bereich von 2900 bis 3300 g/mol und ein gewichtsmittleres Molekulargewicht (Mw) im Bereich von 16000 bis 21000 g/mol auf, jeweils bestimmt nach der vorstehend angegebenen Bestimmungsmethode.

**1.3** *Herstellung einer erfindungsgemäßen wässrigen Dispersion (P) aus (P1) und (P2)*

33 Gewichtsteile der wie unter Punkt 1.1 beschrieben erhaltenen lösemittel-haltigen Dispersion des polymeren Harzes (P1) mit einem Festkörpergehalt von 69 Gew.-% werden in einem Reaktor vorgelegt und auf eine Temperatur von 100 °C erhitzt. 23 Gewichtsteile des wie unter Punkt 1.1 beschriebenen polymeren Harzes (P2) mit einem Festkörpergehalt von 100 Gew.-% werden zunächst geschmolzen und in diesem geschmolzenen Zustand langsam bei 100°C der lösemittel-haltigen Dispersion des polymeren Harzes (P1) unter Erhalt einer 1:1 Mischung der polymeren Harze (P1) und (P2), jeweils bezogen auf den Festkörpergehalt der polymeren Harze, zugegeben. Die resultierende Mischung wird homogenisiert und auf 80°C abgekühlt. Bei dieser Temperatur werden 2 Gewichtsteile Dimethylethanolamin (DMEA) zu der Mischung hinzugegeben. Im Anschluss wird erneut homogenisiert und die resultierende Mischung dann auf 90°C erhitzt. Daraufhin werden unter Rühren bei dieser Temperatur 42 Gewichtsteile deionisiertes Wasser hinzugegen. Unter vermindertem Druck werden daraufhin die organischen Lösemittel, insbesondere das enthaltene MIBK, entfernt. Im Anschluss wird durch Zugabe von deionisiertem Wasser ein Festkörpergehalt der so erhaltenen erfindungsgemäßen, (P1) und (P2) umfassenden, wässrigen Dispersion (P) im Bereich von 45 bis 50 Gew.-%, bezogen auf das Gesamtgewicht der wässrigen Dispersion, eingestellt. Die so erhaltene wässrige Dispersion (P) ist eine stabile, homogene Dispersion ohne Bodensatz. Die in der Dispersion enthaltenen Teilchen weisen einen mittleren Teilchendurchmesser im Bereich von 150 bis 250 nm auf (es handelt sich um den auf das Probenvolumen bezogenen mittleren Teilchendurchmesser ($D_{50}$-Median-Wert), bestimmt mittels des Geräts Mastersizer 2000 der Firma Malvern Instruments Ltd, UK durch Laserbeugung in Ethanol).

**1.4** *Herstellung eines weiteren polymeren Harzes (P2)*

Als weiteres polymeres Harz (P2) wird ein Polyester eingesetzt. Dieser Polyester wird hergestellt durch Zusammengeben der nachfolgend genannten Komponenten unter Rühren mittels eines Dissolvers in der angegebenen Reihenfolge: Ethylenglykol (8,35 g), Trimethylolpropan (1,97 g), Neopentylglykol (27,66 g), Isoterephthalsäure (33,79 g), Adipinsäure (5,31 g) und Hexahydrophthalsäureanhydrid (22,78 g). Als Katalysator wird Fastcat® 4100 eingesetzt (0,13 g). Die eingesetzten Komponenten werden dabei in einen Reaktor gegeben, die resultierende Mischung auf 230-250°C erhitzt und dabei unter Rühren aufgeschmolzen. Gegebenenfalls wird entstandenes Reaktionswasser abdestilliert. Es wird ein Polyester als weiteres polymeres Harz (P2) mit einem Festkörpergehalt von 100 Gew.-% erhalten. Der Polyester weist Hydroxyl-Gruppen und eine Säure-Zahl von <25 mg KOH pro g an Polyester auf.

**1.5** *Herstellung einer weiteren erfindungsgemäßen wässrigen Dispersion (P) aus (P1) und (P2)*

33 Gewichtsteile der wie unter Punkt **1.1** beschrieben erhaltenen lösemittel-haltigen Dispersion des polymeren Harzes (P1) mit einem Festkörpergehalt von 69 Gew.-% werden in einem Reaktor vorgelegt und auf eine Temperatur von 100 °C erhitzt. 23 Gewichtsteile des wie unter Punkt **1.4** beschriebenen polymeren Harzes (P2) mit einem Festkörpergehalt von 100 Gew.-% werden zunächst geschmolzen und in diesem geschmolzenen Zustand langsam bei 100°C der lösemittel-haltigen Dispersion des polymeren Harzes (P1) unter Erhalt einer 1:1 Mischung der polymeren Harze (P1) und (P2), jeweils bezogen auf den Festkörpergehalt der polymeren Harze, zugegeben. Die resultierende Mischung wird homogenisiert und auf 80°C abgekühlt. Bei dieser Temperatur werden 2 Gewichtsteile Dimethylethanolamin (DMEA) zu der Mischung hinzugegeben. Im Anschluss wird erneut homogenisiert und die resultierende Mischung dann auf 90°C erhitzt. Daraufhin werden unter Rühren bei dieser Temperatur 42 Gewichtsteile deionisiertes Wasser hinzugegen. Unter vermindertem Druck werden daraufhin die organischen Lösemittel, insbesondere das enthaltene MIBK, entfernt. Im Anschluss wird durch Zugabe von deionisiertem Wasser ein Festkörpergehalt der so erhaltenen erfindungsgemäßen, (P1) und (P2) umfassenden, wässrigen Dispersion (P) im Bereich von 44 bis 50 Gew.-%, bezogen auf das Gesamtgewicht der wässrigen Dispersion, eingestellt. Die so erhaltene wässrige Dispersion (P) ist eine stabile, homogene Dispersion ohne Bodensatz. Die in der Dispersion enthaltenen Teilchen weisen einen mittleren Teilchendurchmesser im Bereich von 150 bis 250 nm auf (es handelt sich um den auf das Probenvolumen bezogenen mittleren Teilchendurchmesser ($D_{50}$-Median-Wert), bestimmt mittels des Geräts Mastersizer 2000 der Firma Malvern Instruments Ltd, UK durch Laserbeugung in Ethanol).

**1.6** *Herstellung einer nicht-erfindungsgemäßen wässrigen Dispersion aus (P1) und (P2) (Vergleichsdispersion V)*

Die unter Punkt **1.1** beschriebene lösemittel-haltige Dispersion des polymeren Harzes (P1) wird mit deionisiertem Wasser versetzt und unter vermindertem Druck werden die darin enthaltenen organischen Lösemittel entfernt. Im Anschluss wird durch Zugabe von deionisiertem Wasser ein Festkörpergehalt der so erhaltenen wässrigen Dispersion des polymeren Harzes (P1) von 44 Gew.-%, bezogen auf das Gesamtgewicht der wässrigen Dispersion, eingestellt. 52,3 Gewichtsteile dieser wässrigen Dispersion des polymeren Harzes (P1) mit einem Festkörpergehalt von 44 Gew.-% werden in einem Reaktor vorgelegt und auf eine Temperatur von 80 °C erhitzt. 23 Gewichtsteile des wie unter Punkt **1.4** beschriebenen weiteren polymeren Harzes (P2) mit einem Festkörpergehalt von 100 Gew.-% werden in granulierter Form der wässrigen Dispersion des polymeren Harzes (P1) unter Erhalt einer 1:1 Mischung der polymeren Harze (P1) und (P2), jeweils bezogen auf den Festkörpergehalt der polymeren Harze, zugegeben. Unter Rühren werden bei dieser Temperatur 2 Gewichtsteile Dimethylethanolamin (DMEA) zu der Mischung hinzugegeben. Im Anschluss wird gerührt und die resultierende Mischung dann auf 90°C erhitzt. Im Anschluss wird durch Zugabe von 42 Gewichtsteilen deionisiertem Wasser ein Festkörpergehalt der so erhaltenen (P1) und (P2) umfassenden, wässrigen Vergleichsdispersion im Bereich von 44 bis 50 Gew.-%, bezogen auf das Gesamtgewicht der wässrigen Dispersion, eingestellt. Die so erhaltene wässrige Vergleichsdispersion ist inhomogen und es wird das Auftreten eines starken Bodensatzes beobachtet. Die in der Dispersion enthaltenen Teilchen weisen einen mittleren Teilchendurchmesser >1$\mu$m auf. Die Vergleichsdispersion, die somit nicht mittels des wenigstens die Schritte (1), (2), (3) und (4) umfassenden Verfahrens zur Herstellung der erfindungsgemäßen wässrigen Dispersionen hergestellt wird, unterscheidet sich somit substantiell in ihren Eigenschaften von der wie unter Punkt **1.5** beschriebenen erfindungsgemäßen wässrigen Dispersion (P).

**2.** Herstellung einer erfindungsgemäßen wässrigen Beschichtungszusammensetzung und einer Vergleichsbeschichtungszusammensetzung

**2.1** Es wird eine exemplarische erfindungsgemäße wässrige Beschichtungszusammensetzung **B1** hergestellt, die die wie unter Punkt **1.3** beschriebene erfindungsgemäße wässrige Dispersion (P) als Bindemittel-Komponente enthält.

Dabei wird **B1** unter Rühren und Mischen mittels eines Dissolvers durch Zusammengeben der in Tabelle 1 genannten Komponenten (Positionen 1 bis 7) in dieser Reihenfolge hergestellt. Die wässrige Dispersion (P) entspricht dabei jeweils der unter Punkt **1.3** beschriebenen Dispersion (P).

Tabelle 1:

| Position | Komponenten | Anteil der jeweiligen Komponente in B1 in Gew.-%, jeweils bezogen auf das Gesamtgewicht der Beschichtungszusammensetzung B1 |
|---|---|---|
| 1 | Wässrige Dispersion (P) | 25,00 Gew.-% |
| 2 | Netz- und Dispergiermittel | 7,92 Gew.-% |
| 3 | Entschäumungsmittel | 0,42 Gew.-% |
| 4 | Pigment | 31,67 Gew.-% |
| 5 | Wässrige Dispersion (P) | 28,65 Gew.-% |
| 6 | Vernetzungsmittel | 6,13 Gew.-% |
| 7 | Entschäumungsmittel | 0,21 Gew.-% |

Als Netz- und Dispergiermittel wird das kommerziell erhältliche Produkt Disperbyk® 190 und als Entschäumungsmittel das kommerziell erhältliche Produkt Byk® 033 (Festkörpergehalt >97 Gew.-%) eingesetzt. Als Pigment wird $TiO_2$ eingesetzt. Als Vernetzungsmittel wird ein methyliertes Melamin-Formaldehyd-Harz eingesetzt, welches von der Firma BASF unter dem Namen Luwipal® 066 LF kommerziell erhältlich ist.

Die zur Herstellung der wässrigen Beschichtungszusammensetzung B1 eingesetzten Komponenten der Positionen 1-7 gemäß Tabelle 1 werden miteinander an einem Dissolver vermischt und anschließend auf einer Perlmühle vermahlen werden, bis ein Energieeintrag von 75 Wh/kg erreicht ist.

2.2 Als Vergleichsbeschichtungszusammensetzung V1 wird eine kommerziell erhältliche Decklackbeschichtungszusammensetzung POLYCERAM® Plus P der Firma BASF Coatings eingesetzt. Dabei handelt es sich nicht um eine wässrige Beschichtungszusammensetzung, sondern um eine herkömmliche, lösemittelbasierte Beschichtungszusammensetzung, die die folgenden in nachstehender Tabelle 2 aufgelisteten Komponenten enthält:

Tabelle 2:

| Komponenten | Anteil der jeweiligen Komponente in V1 in Gew.-%, jeweils bezogen auf das Gesamtgewicht der Beschichtungszusammensetzung V1 |
|---|---|
| Polyester als Bindemittel-Komponente | 26,06 Gew.-% |
| Additive (Entschäumungsmittel, Wachs, Verlaufshilfsmittel) | 2,28 Gew.-% |
| Melamin- und Harnstoff basiertes Vernetzungsmittel | 7,56 Gew.-% |
| Anorganische Feststoffe (Pigmente, Füller, Salze) | 26,77 Gew.-% |
| Entschäumungsmittel | 0,15 Gew.-% |
| Organische Lösemittel (Alkohole, Paraffine, Aldehyde, Aromaten, Alkylamine und Alkylacetate) | 36,69 Gew.-% |
| deionisiertes Wasser | 0,49 Gew.-% |

Der als Bindemittel-Komponente eingesetzte Polyester ist dabei eine Mischung aus verschiedenen Polyestern, wobei wenigstens einer dieser Polyester ein Polyester (P2) ist. V1 enthält kein polymeres Harz (P1).

3. Herstellung von mit einer erfindungsgemäßen wässrigen Beschichtungszusammensetzung B1 oder einer Vergleichsbeschichtungszusammensetzung V1 beschichteten Substraten

Ein verzinktes Stahlblech OE HDG 5 der Firma Chemetall (Dicke 0,81 mm; Fläche: 10,5 cm · 30 cm) wird mit dem kommerziell erhältlichen Produkt Gardoclean® S5160 der Firma Chemetall alkalisch gereinigt und im Anschluss mit dem kommerziell erhältlichen Produkt Granodine® 1455T der Firma Henkel vorbehandelt. Dann wird auf ein so gereinigtes und vorbehandeltes Blech eine Primer-Schicht mit einem kommerziell erhältlichen Primer (Coiltec® Universal P CF der Firma BASF) aufgetragen und in einem Schubladenofen über eine Dauer von 49 s bei einer Substrattemperatur von 208°C getrocknet. Die Primer-Schicht weist eine Trockenschichtdicke von 5 µm auf. Das wie vorstehend gereinigte, vorbehandelte und mit einer Primer-Schicht versehene verzinkte Stahlblech wird nachfolgend als Blech **T** bezeichnet. Anschließend werden die hergestellten Beschichtungszusammensetzungen **B1** oder **V1** als Decklackbeschichtung mit einer Stabrakel jeweils auf ein so beschichtetes Blech **T** aufgebracht und anschließend unter exemplarischen Coil-Coating-Bedingungen, nämlich bei einer Substrattemperatur von 243°C in einem Schubladenofen über eine Dauer von 63 s ausgehärtet. Die Trockenschichtdicke des so erhaltenen Decklacks beträgt dabei jeweils 20 µm. Es werden die Bleche **TB1** und **TV1** erhalten.

Die Ergebnisse einiger anwendungstechnischer Prüfungen, mittels derer die Beispiele **TB1** und **TV1** untersucht worden sind, sind in nachfolgender Tabelle 3 dargestellt. Die Bestimmung der einzelnen Parameter erfolgt dabei jeweils nach der vorstehend angegebenen Methode.

Tabelle 3:

| | mit **B1** als Decklackschicht beschichtetes Blech **TB1** | mit **V1** als Decklackschicht beschichtetes Blech **TV1** |
|---|---|---|
| Kocherbildung | keine | keine |
| T-bend | 3,0 | 2,5 |
| Tape | 1,0 | 1,0 |
| MEK | >300 | >300 |
| Glanz bei 60°, bestimmt nach Durchführung des UVCON-Test über 1008 h | 70,3 | * |
| Ritzkorrosion nach 360 h neutralem Salzsprühtest [mm] | 1,1 | 0,5 |
| Ritzkorrosion nach 1008 h neutralem Salzsprühtest [mm] | 2,1 | 2,0 |
| Kantenkorrosion nach 360 h neutralem Salzsprühtest [mm] | 1,6 | 1,9 |
| Kantenkorrosion nach 1008 h neutralem Salzsprühtest [mm] | 5,5 | 5,1 |
| *= nicht bestimmt | | |

Aus den Ergebnissen in Tabelle 3 ist insbesondere ersichtlich, dass bei Verwendung der erfindungsgemäßen Beschichtungszusammensetzung **B1** als Decklackschicht für ein Substrat **T** das Auftreten von Oberflächenstörungen wie Kochern verhindert werden kann. Dies wird zwar auch für die Vergleichszusammensetzung **V1** beobachtet, wird jedoch in dieser nur durch die Gegenwart der darin enthaltenen hohen Anteile schwer-flüchtiger organischer Lösemittel erzielt, was aus ökologischen Gründen unerwünscht ist.

**Patentansprüche**

**1.** Eine wässrige Dispersion (P) wenigstens zweier voneinander verschiedener polymerer Harze (P1) und (P2), wobei das polymere Harz (P1) ein Copolymer ist, welches durch Copolymerisation von ethylenisch ungesättigten Monomeren in Gegenwart wenigstens eines polymerisierbare KohlenstoffDoppelbindungen aufweisenden Polyurethan-Harzes erhältlich ist,
und
das polymere Harz (P2) ein funktionelle Hydroxyl-Gruppen aufweisender Polyester ist, welcher eine Säure-Zahl von <25 mg KOH pro g an Polyester aufweist,
**dadurch gekennzeichnet, dass** die wässrige Dispersion (P) erhältlich ist durch ein Verfahren umfassend wenigstens die Schritte (1), (2), (3) und (4), nämlich

(1) Herstellen einer Dispersion oder Lösung des wenigstens einen polymeren Harzes (P1) in wenigstens einem organischen Lösemittel,

(2) Herstellen einer Mischung aus der nach Schritt (1) erhaltenen Dispersion oder Lösung und einer Schmelze oder Lösung des wenigstens einen polymeren Harzes (P2),

(3) Zugeben von Wasser zu der nach Schritt (2) erhaltenen Mischung und

(4) Entfernen des organischen Lösemittels aus der nach Schritt (3) erhaltenen Mischung unter Erhalt der wässrigen Dispersion (P).

2. Die wässrige Dispersion (P) gemäß Anspruch 1, **dadurch gekennzeichnet, dass** das relative Gewichtsverhältnis der polymeren Harze (P1) und (P2) zueinander, jeweils bezogen auf deren Festkörpergehalt, in der Dispersion (P) in einem Bereich von 2:1 bis 1:2 liegt.

3. Die wässrige Dispersion (P) gemäß Anspruch 1 oder 2, **dadurch gekennzeichnet, dass** das polymere Harz (P2) eine Säure-Zahl von <20 mg KOH pro g an (P2) aufweist.

4. Die wässrige Dispersion (P) gemäß einem der vorstehenden Ansprüche, **dadurch gekennzeichnet, dass** das polymere Harz (P2) eine Hydroxyl-Zahl von <50 mg KOH pro g an (P2) aufweist.

5. Die wässrige Dispersion (P) gemäß einem der vorstehenden Ansprüche, **dadurch gekennzeichnet, dass** diese einen Festkörpergehalt im Bereich von 35 bis 75 Gew.-%, bezogen auf das Gesamtgewicht der Dispersion (P) aufweist.

6. Die wässrige Dispersion (P) gemäß einem der vorstehenden Ansprüche, **dadurch gekennzeichnet, dass** das polymere Harz (P1) ein gewichtsmittleres Molekulargewicht ($M_w$) in einem Bereich von 15 000 bis 60 000 g/mol und das polymere Harz (P2) ein gewichtsmittleres Molekulargewicht ($M_w$) in einem Bereich von 5 000 bis 40 000 g/mol aufweist.

7. Eine wässrige Beschichtungszusammensetzung umfassend

(A1) wenigstens die wässrige Dispersion (P) wenigstens zweier voneinander verschiedener polymerer Harze (P1) und (P2) gemäß einem der Ansprüche 1 bis 6,

(A2) wenigstens ein Vernetzungsmittel,

(A3) wenigstens ein Pigment und

(A4) gegebenenfalls wenigstens ein Additiv

zur zumindest teilweisen Beschichtung wenigstens einer mit wenigstens einer Grundierungsschicht beschichteten Metalloberfläche eines Substrats mit einer Decklackschicht.

8. Die wässrige Beschichtungszusammensetzung gemäß Anspruch 7, **dadurch gekennzeichnet, dass** sie einen Festkörpergehalt an den wenigstens zwei polymeren Harzen (P1) und (P2) in einem Bereich von 20 bis 35 Gew.-% aufweist, bezogen auf das Gesamtgewicht der wässrigen Beschichtungszusammensetzung.

9. Die wässrige Beschichtungszusammensetzung gemäß Anspruch 7 oder 8, **dadurch gekennzeichnet, dass** das Vernetzungsmittel (A2) wenigstens ein gegebenenfalls alkyliertes Melamin-Formaldehyd-Kondensationsprodukt ist.

10. Die wässrige Beschichtungszusammensetzung gemäß einem der Ansprüche 7 bis 9, **dadurch gekennzeichnet, dass** sie das wenigstens eine Pigment (A3) in einer Menge in einem Bereich von 25 bis 45 Gew.-% enthält, bezogen auf das Gesamtgewicht der wässrigen Beschichtungszusammensetzung.

11. Eine Verwendung der wässrigen Beschichtungszusammensetzung gemäß einem der Ansprüche 7 bis 10 zur zumindest teilweisen Beschichtung wenigstens einer mit wenigstens einer Grundierungsschicht beschichteten Metalloberfläche eines Substrats mit einer Decklackschicht.

12. Ein Verfahren zur zumindest teilweisen Beschichtung wenigstens einer mit wenigstens einer Grundierungsschicht beschichteten Metalloberfläche eines Substrats mit einer Decklackschicht umfassend wenigstens einen Schritt (d)

(d) zumindest teilweise Beschichtung wenigstens einer mit wenigstens einer Grundierungsschicht beschichteten Metalloberfläche eines Substrats mit der wässrigen Beschichtungszusammensetzung gemäß einem der Ansprüche 7 bis 10 zum Aufbringen einer Decklackschicht.

**13.** Ein Verfahren zur zumindest teilweisen Beschichtung wenigstens einer Metalloberfläche eines Substrats umfassend die Schritte

(a) gegebenenfalls Reinigung der Metalloberfläche von Verschmutzungen,
(b) gegebenenfalls zumindest einseitiges Aufbringen einer Vorbehandlungsschicht auf die Metalloberfläche,
(c) zumindest einseitiges Aufbringen einer Grundierungsschicht auf die Metalloberfläche oder auf die gegebenenfalls in Schritt (b) aufgetragene Vorbehandlungsschicht und gegebenenfalls Aushärten der so aufgetragenen Grundierungsschicht,
(d) zumindest teilweise Beschichtung der mit der Grundierungsschicht gemäß Schritt (c) beschichteten Metalloberfläche mit der wässrigen Beschichtungszusammensetzung gemäß einem der Ansprüche 7 bis 10 zum Aufbringen einer Decklackschicht,
(e) Aushärten der gemäß Schritt (d) aufgetragenen Decklackschicht.

**14.** Eine Decklackschicht, welche erhältlich ist durch zumindest teilweise Beschichtung wenigstens einer mit wenigstens einer Grundierungsschicht beschichteten Metalloberfläche eines Substrats mit der wässrigen Beschichtungszusammensetzung gemäß einem der Ansprüche 7 bis 10 und/oder welche erhältlich ist durch das Verfahren gemäß Anspruch 12 oder 13.

**15.** Ein zumindest teilweise beschichtetes Substrat erhältlich nach dem Verfahren gemäß Anspruch 12 oder 13.

**Claims**

**1.** An aqueous dispersion (P) of at least two polymeric resins (P1) and (P2) which are different from one another, the polymeric resin (P1) being a copolymer obtainable by copolymerization of ethylenically unsaturated monomers in the presence of at least one polyurethane resin having polymerizable carbon double bonds, and the polymeric resin (P2) being a polyester having functional hydroxyl groups and having an acid number of <25 mg of KOH per g of polyester, **characterized in that** the aqueous dispersion (P) is obtainable by a process comprising at least steps (1), (2), (3), and (4):

(1) preparing a dispersion or solution of the at least one polymeric resin (P1) in at least one organic solvent,
(2) preparing a mixture of the dispersion or solution obtained by step (1) and of a melt or solution of the at least one polymeric resin (P2),
(3) adding water to the mixture obtained by step (2), and
(4) removing the organic solvent from the mixture obtained by step (3), to give the aqueous dispersion (P).

**2.** The aqueous dispersion (P) according to Claim 1, **characterized in that** the relative weight ratio of the polymeric resins (P1) and (P2) to one another, based in each case on the solids content thereof, in the dispersion (P) is in a range from 2:1 to 1:2.

**3.** The aqueous dispersion (P) according to Claim 1 or 2, **characterized in that** the polymeric resin (P2) has an acid number of <20 mg of KOH per g of (P2).

**4.** The aqueous dispersion (P) according to any of the preceding claims, **characterized in that** the polymeric resin (P2) has a hydroxyl number of <50 mg of KOH per g of (P2).

**5.** The aqueous dispersion (P) according to any of the preceding claims, **characterized in that** said dispersion has a solids content in the range from 35 to 75 wt%, based on the total weight of the dispersion (P).

**6.** The aqueous dispersion (P) according to any of the preceding claims, **characterized in that** the polymeric resin (P1) has a weight-average molecular weight ($M_w$) in a range from 15 000 to 60 000 g/mol and the polymeric resin (P2) has a weight-average molecular weight ($M_w$) in a range from 5000 to 40 000 g/mol.

**7.** An aqueous coating composition comprising

(A1) at least the aqueous dispersion (P) of at least two polymeric resins (P1) and (P2) which are different from one another, according to any of Claims 1 to 6,

(A2) at least one crosslinking agent,
(A3) at least one pigment, and
(A4) optionally at least one additive

for at least partly coating at least one substrate metal surface, coated with at least one primer coat, with a topcoat.

8. The aqueous coating composition according to Claim 7, **characterized in that** said composition has a solids content of the at least two polymeric resins (P1) and (P2) in a range from 20 to 35 wt%, based on the total weight of the aqueous coating composition.

9. The aqueous coating composition according to Claim 7 or 8, **characterized in that** the crosslinking agent (A2) is at least one optionally alkylated melamine-formaldehyde condensation product.

10. The aqueous coating composition according to any of Claims 7 to 9, **characterized in that** said composition comprises the at least one pigment (A3) in an amount in a range from 25 to 45 wt%, based on the total weight of the aqueous coating composition.

11. A use of the aqueous coating composition according to any of Claims 7 to 10 for at least partly coating at least one substrate metal surface, coated with at least one primer coat, with a topcoat.

12. A process for at least partly coating at least one substrate metal surface, coated with at least one primer coat, with a topcoat, comprising at least one step (d)

   (d) at least partly coating at least one substrate metal surface, coated with at least one primer coat, with the aqueous coating composition according to any of Claims 7 to 10 for the application of a topcoat.

13. A process for at least partly coating at least one substrate metal surface, comprising the steps of

   (a) optionally cleaning the metal surface to remove soiling,
   (b) optionally at least single-sidedly applying a pretreatment coat to the metal surface,
   (c) at least single-sidedly applying a primer coat to the metal surface or to the pretreatment coat optionally applied in step (b), and optionally curing the primer coat thus applied,
   (d) at least partly coating the metal surface, coated with the primer coat as per step (c), with the aqueous coating composition according to any of Claims 7 to 10, for the application of a topcoat,
   (e) curing the topcoat applied as per step (d).

14. A topcoat obtainable by at least partly coating at least one substrate metal surface, coated with at least one primer coat, with the aqueous coating composition according to any of Claims 7 to 10, and/or obtainable by the process according to Claim 12 or 13.

15. An at least partly coated substrate obtainable by the process according to Claim 12 or 13.

## Revendications

1. Dispersion aqueuse (P) d'au moins deux résines polymères (P1) et (P2) différentes l'une de l'autre,
   la résine polymère (P1) étant un copolymère, qui peut être obtenu par copolymérisation de monomères éthyléniquement insaturés en présence d'au moins une résine de polyuréthane comprenant des doubles liaisons carbone polymérisables,
   et
   la résine polymère (P2) étant un polyester comprenant des groupes hydroxyle fonctionnels, qui présente un indice d'acidité < 25 mg de KOH par g de polyester,
   **caractérisée en ce que** la dispersion aqueuse (P) peut être obtenue par un procédé comprenant au moins les étapes (1), (2), (3) et (4), à savoir :

   (1) la fabrication d'une dispersion ou solution de ladite au moins une résine polymère (P1) dans au moins un solvant organique,
   (2) la fabrication d'un mélange à partir de la dispersion ou solution obtenue après l'étape (1) et d'une masse fondue ou solution de ladite au moins une résine polymère (P2),
(3) l'ajout d'eau au mélange obtenu après l'étape (2) et
(4) l'élimination du solvant organique du mélange obtenu après l'étape (3) avec obtention de la dispersion aqueuse (P).

2. Dispersion aqueuse (P) selon la revendication 1, **caractérisée en ce que** le rapport en poids relatif des résines polymères (P1) et (P2) l'une par rapport à l'autre, à chaque fois par rapport à leur teneur en solides, dans la dispersion (P) se situe dans une plage allant de 2:1 à 1:2.

3. Dispersion aqueuse (P) selon la revendication 1 ou 2, **caractérisée en ce que** la résine polymère (P2) présente un indice d'acidité < 20 mg de KOH par g de (P2).

4. Dispersion aqueuse (P) selon l'une quelconque des revendications précédentes, **caractérisée en ce que** la résine polymère (P2) présente un indice hydroxyle < 50 mg de KOH par g de (P2).

5. Dispersion aqueuse (P) selon l'une quelconque des revendications précédentes, **caractérisée en ce que** celle-ci présente une teneur en solides dans la plage allant de 35 à 75 % en poids, par rapport au poids total de la dispersion (P).

6. Dispersion aqueuse (P) selon l'une quelconque des revendications précédentes, **caractérisée en ce que** la résine polymère (P1) présente un poids moléculaire moyen en poids ($M_w$) dans une plage allant de 15 000 à 60 000 g/mol et la résine polymère (P2) présente un poids moléculaire moyen en poids ($M_w$) dans une plage allant de 5 000 à 40 000 g/mol.

7. Composition de revêtement aqueuse comprenant :

   (A1) au moins la dispersion aqueuse (P) d'au moins deux résines polymères (P1) et (P2) différentes l'une de l'autre selon l'une quelconque des revendications 1 à 6,
   (A2) au moins un agent de réticulation,
   (A3) au moins un pigment et
   (A4) éventuellement au moins un additif,

   pour le revêtement au moins partiel d'au moins une surface métallique d'un substrat, revêtue avec au moins une couche d'apprêt, avec une couche de vernis de recouvrement.

8. Composition de revêtement aqueuse selon la revendication 7, **caractérisée en ce qu'**elle présente une teneur en solides desdites au moins deux résines polymères (P1) et (P2) dans une plage allant de 20 à 35 % en poids, par rapport au poids total de la composition de revêtement aqueuse.

9. Composition de revêtement aqueuse selon la revendication 7 ou 8, **caractérisée en ce que** l'agent de réticulation (A2) est au moins un produit de condensation mélamine-formaldéhyde éventuellement alkylé.

10. Composition de revêtement aqueuse selon l'une quelconque des revendications 7 à 9, **caractérisée en ce qu'**elle contient ledit au moins un pigment (A3) en une quantité dans une plage allant de 25 à 45 % en poids, par rapport au poids total de la composition de revêtement aqueuse.

11. Utilisation de la composition de revêtement aqueuse selon l'une quelconque des revendications 7 à 10 pour le revêtement au moins partiel d'au moins une surface métallique d'un substrat, revêtue avec au moins une couche d'apprêt, avec une couche de vernis de recouvrement.

12. Procédé de revêtement au moins partiel d'au moins une surface métallique d'un substrat, revêtue avec au moins une couche d'apprêt, avec une couche de vernis de recouvrement, comprenant au moins une étape (d) :

   (d) le revêtement au moins partiel d'au moins une surface métallique d'un substrat, revêtue avec au moins une couche d'apprêt, avec la composition de revêtement aqueuse selon l'une quelconque des revendications 7 à 10 pour l'application d'une couche de vernis de recouvrement.

13. Procédé de revêtement au moins partiel d'au moins une surface métallique d'un substrat, comprenant les étapes suivantes :

(a) éventuellement le nettoyage de salissures de la surface métallique,

(b) éventuellement l'application au moins d'un côté d'une couche de prétraitement sur la surface métallique,

(c) l'application au moins d'un côté d'une couche d'apprêt sur la surface métallique ou sur la couche de prétraitement éventuellement appliquée dans l'étape (b) et éventuellement le durcissement de la couche d'apprêt ainsi appliquée,

(d) le revêtement au moins partiel de la surface métallique, revêtue avec la couche d'apprêt selon l'étape (c), avec la composition de revêtement aqueuse selon l'une quelconque des revendications 7 à 10 pour l'application d'une couche de vernis de recouvrement,

(e) le durcissement de la couche de vernis de recouvrement appliquée selon l'étape (d).

14. Couche de vernis de recouvrement, qui peut être obtenue par revêtement au moins partiel d'au moins une surface métallique d'un substrat, revêtue avec au moins une couche d'apprêt, avec la composition de revêtement aqueuse selon l'une quelconque des revendications 7 à 10 et/ou qui peut être obtenue par le procédé selon la revendication 12 ou 13.

15. Substrat au moins partiellement revêtu pouvant être obtenu par le procédé selon la revendication 12 ou 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4010176 A1
- WO 9612747 A
- WO 0104222 A
- WO 2009100938 A1
- DE 4009858 A1
- WO 2006079628 A2
- WO 9115528 A1
- EP 0562329 A2
- WO 2009115504 A1
- WO 2006079628 A1

**In der Beschreibung aufgeführte Nicht-Patentliteratur**

- Römpp Lexikon, Lacke und Druckfarben. Georg Thieme Verlag, 1998
- Füllstoffe. Römpp Lexikon Lacke und Druckfarben. Georg Thieme Verlag, 1998, 250 ff
- Effektpigmente. Römpp Lexikon Lacke und Druckfarben. Georg Thieme Verlag, 1998, 176